(19) **Europäisches Patentamt / European Patent Office / Office européen des brevets**

(11) **EP 2 082 920 B1**

(12) **EUROPÄISCHE PATENTSCHRIFT**

(45) Veröffentlichungstag und Bekanntmachung des Hinweises auf die Patenterteilung:
**11.04.2012 Patentblatt 2012/15**

(51) Int Cl.:
*B60N 2/56* (2006.01)   *B60H 1/22* (2006.01)
*B60H 1/00* (2006.01)

(21) Anmeldenummer: **08001350.1**

(22) Anmeldetag: **24.01.2008**

(54) **Elektrische Zusatzheizung für ein Kraftfahrzeug**

Electric additional heating for a motor vehicle

Chauffage électrique d'appoint pour véhicule automobile

(84) Benannte Vertragsstaaten:
**DE ES FR GB IT**

(43) Veröffentlichungstag der Anmeldung:
**29.07.2009 Patentblatt 2009/31**

(60) Teilanmeldung:
**11183571.6 / 2 402 209**

(73) Patentinhaber: **Eberspächer catem GmbH & Co. KG**
**76863 Herxheim bei Landau (DE)**

(72) Erfinder:
• **Zeyen, Michael**
**76863 Herxheim-Hayna (DE)**

• **Bohlender, Franz**
**76870 Kandel (DE)**
• **Mundt, Ulrich**
**76863 Herxheim (DE)**

(74) Vertreter: **Grünecker, Kinkeldey, Stockmair & Schwanhäusser Anwaltssozietät**
**Leopoldstrasse 4**
**80802 München (DE)**

(56) Entgegenhaltungen:
**EP-A- 1 511 651       DE-A1- 19 850 827**
**DE-B3-102004 030 705   US-A1- 2005 085 968**
**US-A1- 2006 175 877**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf eine elektrische Zusatzheizung für ein Kraftfahrzeug. Insbesondere betrifft die Erfindung eine Zusatzheizung, die neben einem Heizelement auch eine Steuereinheit zur Steuerung der vom Heizelement aufzubringenden Heizleistung aufweist.

Um den Fahrkomfort bei Fahrten mit offenem Verdeck zu erhöhen, werden bereits seit geraumer Zeit zur Verhinderung von Zuglufterscheinungen Heizungen in Cabrios eingesetzt. Bei diesen Heizungen wird die von einem Gebläse angesaugte bzw. ausgestoßene Luft durch die Abwärme des Motors oder unter Verwendung von zusätzlichen Heizmodulen erwärmt und in den Innenraum des Kraftfahrzeugs geblasen. Zusätzlich können auch die Fahrzeugsitze mit Luftausströmöffnungen versehen werden, um den Nackenbereich eines Fahrzeuginsassen mit warmer Luft zu umströmen. Die Heizleistung solcher in Armaturen, Sitzen oder anderen Teilen des Fahrzeugs angebrachter Heizungen wird in der Regel manuell vom Benutzer bestimmt, jedoch hat der Benutzer nur geringen Einfluss auf die genaue Temperatur und Stärke der aus der Heizung ausströmenden Luft.

Zur Versorgung des Nackenbereiches eines Fahrzeuginsassen mit warmer Luft ist beispielsweise aus DE 100 54 009 A1 eine Windschutzeinrichtung für einen offenen Kraftwagen bekannt, in welcher der aus einer im Sitz angebrachten Luftstromöffnung austretende Luftstrom in Abhängigkeit von der Fahrgeschwindigkeit des Fahrzeugs geregelt wird. Die Intensität des Luftstroms wird dabei in DE 100 54 009 A1 bei zunehmender Fahrzeuggeschwindigkeit erhöht, während sie bei sich reduzierender Fahrzeuggeschwindigkeit gesenkt wird. Zusätzlich wird die Heizleistung an die veränderte Stärke des Luftstroms angepasst, um die Temperatur der aus der Luftstromöffnung austretenden Luft konstant zu halten. Die in DE 100 54 009 A1 beschriebene Steuerung des Luftstroms ist somit sehr aufwendig, da sowohl das Gebläse als auch das Heizelement geregelt werden müssen.

Auch wird in DE 100 54 009 A1 nicht berücksichtigt, dass bei den zum Erwärmen der Luft verwendeten Heizelementen Trägheitseffekte bei einer Änderung der Heizleistung auftreten. Erhöht sich beispielsweise während einer Beschleunigungsphase des Fahrzeugs das Volumen des Luftstroms sehr stark, so ist ein PTC-Heizelement aufgrund seiner Trägheit nicht in der Lage, die zum Konstanthalten der Temperatur des austretenden Luftstroms benötigte Heizleistung bereitzustellen. Während der Beschleunigungsphase wird somit Luft in den Nacken des Fahrzeuginsassen geblasen, die nicht ausreichend erwärmt ist, wodurch unerwünschte Zuglufterscheinungen auftreten.

In gleicher Weise treten Probleme bei starkem Abbremsen des Fahrzeugs auf. Aufgrund der Trägheit des Heizelements kann die Heizleistung nicht genauso schnell reduziert werden, wie sich das Volumen des Luftstroms reduziert. Während des Abbremsens wird deshalb Luft mit zu hoher Temperatur in den Nacken des Fahrzeuginsassen geblasen.

Weitere Beispiele für Lüftungseinrichtungen für Fahrzeugsitze sind aus DE 198 50 827, EP 1 511 651, welches die Merkmale des Oberbegriffs des Anspruchs 1 enthält, sowie, DE 10 2004 030705, US 20061175877 und US 2005/0085968 bekannt.

Aufgabe der vorliegenden Erfindung ist es daher, eine verbesserte elektrische Zusatzheizung anzugeben, mit welcher die oben beschriebenen Probleme vermieden werden können.

Diese Aufgabe wird erfindungsgemäß durch die Merkmale der unabhängigen Ansprüche gelöst. Vorteilhafte Ausführungsformen mit zweckmäßigen Weiterbildungen der Erfindung sind in den Unteransprüchen angegeben.

Es ist der besondere Ansatz der vorliegenden Erfindung, anstelle des Volumens des aus der Zusatzheizung strömenden Luftstroms dessen Temperatur in Abhängigkeit von der Fahrzeuggeschwindigkeit einzustellen. Erfindungsgemäß weist die elektrische Zusatzheizung wenigstens ein PTC-Heizelement auf, welches die durch die Zusatzheizung strömende Luft erwärmt, ein **Gebläse, das einen Luftstrom konstanter Stärke erzeugt** und eine Steuereinheit, welche die vom Heizelement abgegebene Heizleistung einstellt. Um geschwindigkeitsabhängige Einflüsse, z.B. des Fahrtwinds, zu kompensieren, stellt die Steuereinheit die Temperatur der aus der Zusatzheizung strömenden Luft in Abhängigkeit von der Fahrzeuggeschwindigkeit ein.

Zur Einstellung der aufzubringenden Heizleistung umfasst die Zusatzheizung eine Temperaturbestimmungseinheit, welche die Temperatur, im Folgenden als "Kaltlufttemperatur" bezeichnet, der von der Zusatzheizung zu erwärmenden Luft ermittelt. Basierend auf der ermittelten Kaltlufttemperatur bestimmt die Steuereinheit die vom Heizelement zu erbringende Heizleistung zusätzlich in Abhängigkeit von der ermittelten Kaltlufttemperatur.

Erfindungsgemäß wird somit eine für den Fahrzeuginsassen angenehme Temperierung im Nackenbereich erzeugt. Herkömmlich wird zu diesem Zweck in Abhängigkeit von der Fahrgeschwindigkeit der Luftdurchsatz geändert. Bei dieser Vorgehensweise lässt sich jedoch nur schwer die Temperatur der ausströmenden Luft konstant halten. Bei jeder Änderung des durchströmenden Luftvolumens wird in den Nackenbereich kurzzeitig heiße oder kalte Luft geblasen. Mit dem erfindungsgemäßem Verfahren und der erfindungsgemäßen Heizung können diese Nachteile effizient bei außerdem vereinfachtem Aufbau der Zusatzheizung vermieden werden.

Durch die Ermittlung der Temperatur der zu erwärmenden kalten Luft kann die aufzubringende Heizleistung exakt an die Eigenschaften der anströmenden Luft angepasst werden. Auf diese Weise kann die geschwindigkeitsabhängige Steuerung der Warmlufttemperatur der aus der Heizung austretende Luft präzise an die Fahrzeuggeschwindigkeit angepasst werden. Ist z.B. die zu erwärmende Luft sehr kalt, so ist zu deren Erwärmung auf eine vorbestimme Temperatur eine höhere Heizleistung notwendig, während eine höhere Lufttemperatur eine geringere Heizleistung zur Erwärmung benötigt. Da die exakte Temperatur der aus der Zusatzheizung strömenden Luft von der Kaltlufttemperatur und der **Heizleistung abhängt, lässt sich diese Temperatur sehr viel besser kontrollieren.**

Vorzugsweise stellt die Steuereinheit für die Heizleistung, die zur Variation der Temperatur der ausströmenden Luft aufgebracht wird, einen Grundwert ein, von dem ausgehend die Heizleistung in Abhängigkeit von der Geschwindigkeit des Fahrzeugs variiert wird. Vorzugsweise ist dieser Grund vorwählbar, z.B. von einem Fahrzeuginsassen, oder wird automatisch in Abhängigkeit von einem äußeren Parameter, beispielsweise der Außentemperatur, eingestellt.

Somit lässt sich die Temperatur der ausströmenden Warmluft in einfacher Weise an die Bedürfnisse eines Fahrzeuginsassen oder an äußere Einflüsse anpassen. Dies ist vor allem bei der Verwendung der Zusatzheizung im Nackenbereich eines Fahrzeuginsassen von Vorteil. Bei Fahrten mit offenem Verdeck wird die Kälte des Fahrtwindes und damit die Stärke der Zuglufterscheinung von der Außentemperatur maßgeblich beeinflusst. Zusätzlich bieten viele Heizungen wie bereits beschrieben verschiedene vom Fahrzeuginsassen manuell wählbare Komfortstufen an, denen jeweils eine bestimmte Stärke der Heizleistung zugeordnet ist. Durch die Berücksichtigung eines Grundwertes können somit individuelle Vorgaben des Fahrzeuginsassen oder Einflüsse der Außentemperatur bei der Steuerung der Temperatur der ausströmenden Luft berücksichtigt werden.

Neben der Auswahl einer Komfortstufe der Heizung ist es in den meisten Fahrzeugen auch möglich, den Luftdurchsatz durch die Heizung auf individuelle Bedürfnisse einzustellen. So können beispielsweise Gebläsestufen zur Einstellung der Umdrehungszahl des die Heizung mit Luft versorgenden Gebläses gewählt werden. Um diesem Sachverhalt Rechnung zu tragen, berücksichtigt die Zusatzheizung vorzugsweise zusätzlich das Volumen des durch die Zusatzheizung strömenden Luftmassenstroms beim Einstellen des Grundwerts.

Da die Abhängigkeit der zur Temperaturvariation aufzubringenden Heizleistung von der Fahrzeuggeschwindigkeit oft theoretisch nicht exakt bekannt ist, speichert die Zusatzheizung vorzugsweise ein Kennfeld, das die Abhängigkeit der Heizleistung von der Fahrzeuggeschwindigkeit beschreibt. Ein solches Kennfeld kann beispielsweise experimentell in einfacher Weise bestimmt werden.

Vorzugsweise bestimmt die Temperaturbestimmungseinheit die Kaltlufttemperatur unter Verwendung wenigstens eines gemessenen Temperaturwerts. Dabei kann zusätzlich zur Verbesserung der Bestimmung der Kaltlufttemperatur ein Korrekturfaktor verwendet werden. Durch die Verwendung eines Korrekturfaktors ist es nicht erforderlich, die Temperatur der zu erwärmenden Luft über einen im Luftkanal vor dem Heizelement angebrachten Sensors zu messen. Vielmehr lässt sich diese Temperatur aus Temperaturwerten bestimmen, die von anderen Bauteilen eines Fahrzeugs, wie z.B. der Klimaanlage, zur Verfügung gestellt werden. So kann im Umwälzmodus der Lüftung/Heizung die Temperatur der angesaugten Luft leicht aus der Innenraumtemperatur des Fahrzeugs bestimmt werden, während im Durchlaufbetrieb, bei dem frische Außenluft in das Fahrzeug strömt, die Außentemperatur am Fahrzeug einen guten Wert für die Kaltlufttemperatur darstellt.

Um die Kaltlufttemperatur aus einem im Fahrzeug erfassten Temperaturwert zu bestimmen, wird vorzugsweise wenigstens ein Korrekturfaktor verwendet, der den Unterschied zwischen der gemessenen Temperatur und der exakten Temperatur der zu erwärmenden Luft ausgleicht. Oft ist dieser Temperaturunterschied während des Betriebs des Fahrzeugs nicht konstant. Um dieser zeitlichen Variation Rechnung zu tragen, verwendet die Temperaturbestimmungseinheit in einer weiter vorteilhaften Ausführungsform Korrekturfaktoren, welche die zeitliche Variation der Kaltlufttemperatur gegenüber dem gemessenen Temperaturwert korrigieren.

Da bei einem Fahrzeug mit offenem Verdeck bzw. geöffneten Fenstern sich die Außentemperatur maßgebend auf die Kaltlufttemperatur der zu erwärmenden Luft auswirkt, erfolgt die Ermittlung der Kaltlufttemperatur vorzugsweise aus einer gewichteten Kombination einer Fahrzeuginnenraum- und der Fahrzeugaußenraumtemperatur.

Alternativ verwendet die Temperaturbestimmungseinheit der vorliegenden Erfindung einen im Luftansaugtrakt zwischen einem Gebläse und dem Heizelement angeordneten Temperatursensor zum Messen der Kaltlufttemperatur. Da die Kaltlufttemperatur oft nicht direkt vor dem Heizelement gemessen wird, kann sich die Kaltlufttemperatur nach der Temperaturmessung unter Umständen geringfügig ändern bevor die Luft erwärmt wird. Deshalb wird vorzugsweise zusätzlich ein Korrekturfaktor verwendet, der Abweichungen vom gemessenen Wert berücksichtigt.

Da die zur Bestimmung der aufzubringenden Heizleistung nötigen Parameter, wie die Heizeigenschaften des Heizelements oder die Einflüsse des Fahrzeugs, oft nicht theoretisch bekannt sind, speichert die Zusatzheizung vorzugsweise ein Kennfeld, das die aufzubringende Heizleistung in Abhängigkeit von Eingangsgrößen beschreibt. Dabei kann die Steuerung der Zusatzheizung durch Kombination mathematischer Formeln mit dem Kennfeld erfolgen. Auch kann die Steuereinheit die Einstellung der Heizleistung vollständig mittels Kennfelder durchführen.

Durch die Integrierung des Gebläses in die Zusatzheizung kann die Fertigung von Fahrzeugen erleichtert werden, da zum Einbau der Zusatzheizung und des Gebläses nicht mehr getrennte Arbeitsschritte benötigt werden.

Mit der vorliegenden Erfindung ist eine elektrische Zusatzheizung im Kraftfahrzeug in einfacher Weise überall als autark operierende Zusatzheizung einsetzbar. Sie eignet sich daher besonders gut zur dezentralen Beheizung und kann an beliebigen Einsatzorten montiert werden, beispielsweise in Fahrzeugsitzen, im Fondbereich, im Fußraum, in den B- oder C-Säulen eines Kraftfahrzeugs. Vor allem die genaue Bestimmung der aufzubringenden Heizleistung ermöglicht es, die Zusatzheizung in direkter Nähe der Fahrzeuginsassen einzusetzen. Vorzugsweise ist deshalb die Zusatzheizung in einem Fahrzeugsitz vorgesehen, der den Sitz-, Rücken- oder Nackenbereich eines Insassen mit warmer Luft versorgt.

Weitere Vorteile, Merkmale und Einzelheiten der Erfindung ergeben sich aus der nachfolgenden Beschreibung bevorzugter Ausführungsbeispiele sowie anhand der Figuren; diese zeigen in:

Fig. 1    einen schematischen Aufbau der elektrischen Zusatzheizung gemäß der vor- liegenden Erfindung,

Fig. 2    einen zeitlichen Verlauf der Heizleistungsaufnahme der erfindungsgemäßen Zusatzheizung bei einem Lastwechsel.

Fig. 3    einen schematischen Aufbau der elektrischen Zusatzheizung gemäß der vor- liegenden Erfindung mit einer zusätzlich Temperaturbestimmungseinheit,

Fig. 4    einen Aufbau der elektrischen Zusatzheizung gemäß der vorliegenden Erfin- dung mit integriertem Gebläse,

Fig. 5    einen Fahrzeugsitz mit eingebauter Zusatzheizung und

Fig. 6    ein Ablaufdiagramm, welches das Prinzip der Steuerung der elektrischen Zusatzheizung unter Berücksichtigung der Temperatur der das Heizelement anströmenden Luft darstellt.

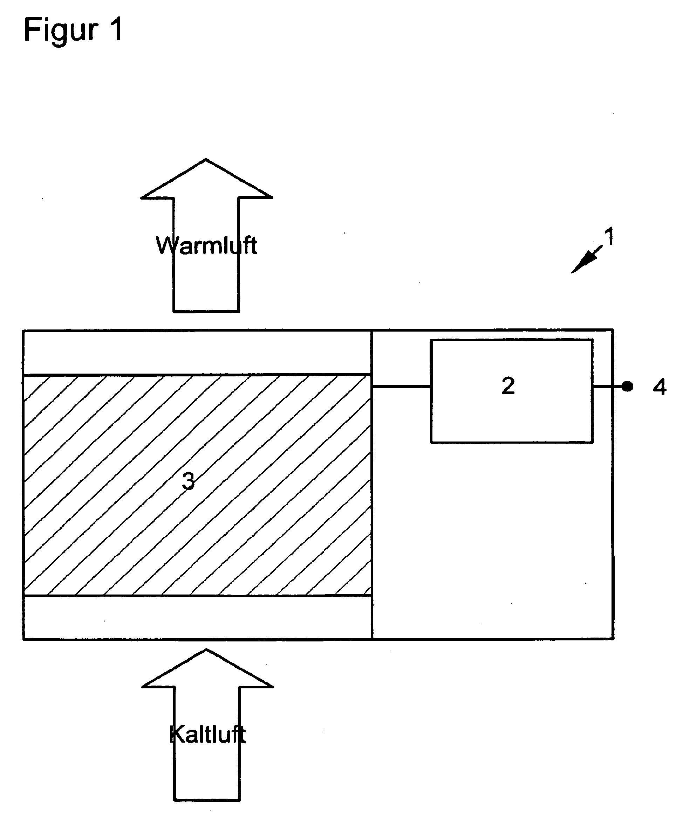

Fig. 1 zeigt den schematischen Aufbau der elektrischen Zusatzheizung der vorliegenden Erfindung gemäß einer ersten Ausführungsform. Die Zusatzheizung 1 umfasst einen Heizabschnitt 3 aus einem oder einer Mehrzahl von PTC-Heizelementen und aus Radiatorelementen zur Abgabe der Heizleistung an die durch die Radiatorelemente strömende Luft sowie eine Steuereinheit 2 zur Einstellung der Heizleistung des einen oder der Mehrzahl von Heizelementen.

Um die Zusatzheizung 1 mit anderen Komponenten in einem Fahrzeug zu verbinden, weist die Zusatzheizung 1 einen Anschluss 4 auf. Über diesen Anschluss können der Steuereinheit 2 im oder am Kraftfahrzeug ermittelte Parameterwerte zugeführt werden, beispielsweise von einem Fahrgeschwindigkeits- oder Temperatursensor. Über diesen Anschluss können auch benutzerdefinierte Vorgaben oder Signale anderer Fahrzeugkomponenten an die Steuereinheit 2 weitergegeben werden.

Die Verbindung der Zusatzheizung 1 mit externen Geräten des Fahrzeugs kann dabei direkt in analoger oder digitaler Weise erfolgen. In diesem Fall ist jedoch ein hoher Kabelaufwand nötig, da jedes externe Gerät einzeln mit der Zusatzheizung 1 verbunden werden muss. Um diese Problem zu umgehen, wird in Fahrzeugen vermehrt ein Bus, z. B. CAN- oder LIN-Bus, eingesetzt. Auf dem Bus werden die Signale einer Vielzahl von Geräten an andere Geräte des Fahrzeugs mittels einer einzigen Leitung weitergegeben. Durch Anschluss 4 kann die Zusatzheizung 1 in einfacher Weise mit einem solchen Datenbus verbunden werden und die über den Bus erhaltenen Signale weiterverarbeiten. So kann beispielsweise die Steuereinheit 2 über den Bus ein Signal erhalten, das die Geschwindigkeit des Fahrzeugs anzeigt.

Jedoch ist dem Fachmann klar, dass die oben beschriebene Verwendung der Anschlüsse lediglich Beispiele sind, und die Anschlüsse eine Vielzahl von Möglichkeiten zur Einflussnahme auf die Zusatzheizung bieten.

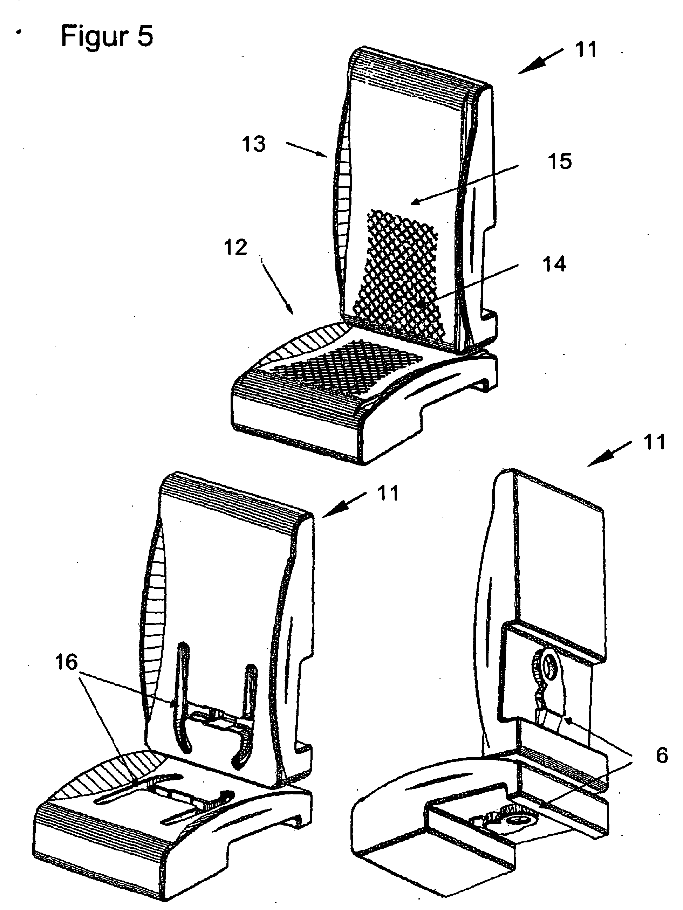

Gemäß einer besonderen Ausführungsform der Erfindung ist die Zusatzheizung zusätzlich mit einem Gebläse ausgestattet. Das Gebläse erzeugt einen Luftstrom, der über die Heizelemente erwärmte Luft aus einer Ausströmöffnung in den Fahrzeuginnenraum bläst. Diese Ausführungsform wird nachfolgend in Zusammenhang mit Fig. 5 näher beschrieben.

Als Ausgangspunkt der Steuerung der Temperatur der ausströmenden Luft dient ein Signal, das Rückschlüsse auf die Fahrzeuggeschwindigkeit erlaubt Dies kann beispielweise ein Tachosignal sein, das den exakten Wert der Fahrzeuggeschwindigkeit angibt. Alternativ kann das Signal auch die Rad- oder Getriebedrehzahl sein und beispielsweise vom Antiblockiersystem stammen. Auf dem Signal basierend steuert die Steuereinheit 2 die Temperatur der aus der Zusatzheizung strömenden Luft, so dass sich diese bei anwachsender Fahrgeschwindigkeit erhöht und sich bei reduzierender Fahrzeuggeschwindigkeit erniedrigt.

Im Folgenden werden verschiedene beispielhafte Ausführungen der vorliegenden Erfindung beschrieben, welche die Geschwindigkeitsabhängige Steuerung der Temperatur der ausströmenden Luft darstellen.

Der besondere Ansatz der vorliegenden Erfindung besteht darin, den Luftdurchsatz im Gegensatz zum Stand der Technik von der Fahrgeschwindigkeit zu entkoppeln. Um bei sich ändernder Fahrgeschwindigkeit eine angenehme Temperierung im Nackenbereich zu erreichen, wird stattdessen der Luftdurchsatz im wesentlichen konstant gehalten und die Temperatur der ausströmenden Luft variiert.

Für einen konstanten Luftdurchsatz durch die Zusatzheizung bleibt die Gebläsedrehzahl unabhängig von der momentanen Geschwindigkeit des Fahrzeugs auf demselben Wert. Eine Erhöhung bzw. Erniedrigung der Heizleistung führt somit unmittelbar zu einer dementsprechenden Erhöhung bzw. Erniedrigung der Temperatur des aus der Zusatzheizung strömenden Luftstroms. Deshalb kommt es selbst unter Berücksichtigung der zuvor beschriebenen Trägheit des Heizelements nicht zu den nachteiligen Temperaturschwankungen während einer starken Änderung der Geschwindigkeit, wie sie bei herkömmlichen Zusatzheizungen auftreten können.

Konstanter Luftdurchsatz bedeutet im Rahmen der Erfindung nicht, dass der Luftdurchsatz unveränderbar ist. Selbstverständlich ist vom Benutzer ein anderer Luftdurchsatz vorwählbar. Der Luftdurchsatz kann auch in Abhängigkeit von anderen Parametern variieren, nicht jedoch in Abhängigkeit von der Fahrgeschwindigkeit. Zu diesem Zweck kann die Steuereinheit 2 über Anschluss 4 ein Signal empfangen, das Auskunft über die Stärke des Luftstroms gibt und vom Gebläse oder von einer anderen Komponente des Fahrzeugs abgegeben wird. Beispielsweise kann dieses Signal Auskunft über die Umdrehungszahl des Lüfters oder über eine ausgewählte Belüftungsstufe geben. Basierend auf dem empfangenen Signal passt die Steuereinheit 2 die Heizleistung an das veränderte Luftvolumen an, so dass vorzugsweise bei Erhöhung der Luftstromstärke die Heizleistung dementsprechend erhöht bzw. bei Verringerung des Luftstroms die Heizleistung dementsprechend erniedrigt wird.

Wie zuvor erwähnt, wird die Temperatur des aus der Zusatzheizung ausströmenden Luftstroms durch Variation der Heizleistung gesteuert. Dabei wird die von dem oder den Heizelementen an die zu erwärmende Luft abgegebene Heizleistung so an die Fahrzeuggeschwindigkeit angepasst, dass mit zunehmender Geschwindigkeit auch die Lufttemperatur ansteigt und sich bei abnehmender Geschwindigkeit verringert. Die Geschwindigkeitsabhängigkeit der Heizleistung und damit die Geschwindigkeitsabhängigkeit der ausströmenden Luft lässt sich hierbei auf mehrere Arten steuern.

Dies kann beispielsweise durch lineare oder nicht lineare funktionale Zusammenhänge erfolgen, welche die Abhängigkeit der Heizleistung von der Fahrzeuggeschwindigkeit oder der Raddrehzahl beschreiben. Auch ist es möglich eine Kennlinie, welche die Abhängigkeit der Heizleistung von der Fahrzeuggeschwindigkeit und eventuellen anderen Parametern widerspiegelt, zu verwenden. In diesem Fall lässt sich der Rechenaufwand zur Bestimmung der Heizleistung vermeiden. Jedoch ist es dem Fachmann klar, dass es noch andere Möglichkeiten zur Ermittlung der erforderlichen Heizleistung gibt und die oben erwähnten Verfahren lediglich Beispiele sind.

Um die oben und im Folgenden beschriebenen Funktionen auszuführen, kann in der Steuereinheit 2 beispielsweise eine Speichereinheit (nicht dargestellt) zur Abspeicherung von Steuerprogrammen, Funktionsroutinen oder Kennlinien, welche die Steuerung des Heizelements definieren, enthalten sein. Zusätzlich ist in diesem Fall vorzugsweise in der Steuereinheit 2 ein Prozessor vorgesehen, der die in der Speichereinheit gespeicherten Programme ausführt. Jedoch ist es dem Fachmann klar, dass eine geschwindigkeitsabhängige Steuerung der Warmlufttemperatur auch auf andere Weise realisiert werden kann.

Auch ist es möglich über Anschluss 4 die in Speichereinheiten gespeicherten Kontrollprogramme zu aktualisieren oder die Steuereinheit 2 zu warten.

Die Steuerung der Heizleistung kann in einfacher Weise durch eine geeignete Wahl der durch das Heizelement (oder durch eine Mehrzahl von vorzugsweise separat ansteuerbaren PTC-Heizelementen) fließenden Stromstärke erreicht werden. Dazu werden im allgemeinen je nach Anzahl der separat ansteuerbaren Heizstufen der Zusatzheizung Leistungshalbleiter verwendet, die den jeder Heizstufe zuzuführenden Strom einstellen. Mit der erfindungsgemäßen Ansteuerung wird die von dem oder den Heizelementen an die durch die Zusatzheizung strömende Luft abgegebene Heizleistung so an die Fahrzeuggeschwindigkeit angepasst, dass mit zunehmender Geschwindigkeit auch die Lufttemperatur ohne nachteilige Regelungsüberschwinger ansteigt. Unangenehme Überhitzungen des erwärmten Luftstroms können sicher vermieden werden.

Neben der Berücksichtigung der Fahrzeuggeschwindigkeit ist es auch von Vorteil, die Außentemperatur bei der geschwindigkeitsabhängigen Variation der Warmlufttemperatur der aus der Zusatzheizung strömenden Luft zu berücksichtigen. Zusätzlich bieten viele Heizungen wie bereits beschrieben verschiedene vom Fahrzeuginsassen manuell wählbare Komfortstufen an, denen jeweils eine bestimmte Stärke der Heizleistung zugeordnet ist.

Um dies zu berücksichtigen, wird vorzugsweise die Heizleistung, die zur Variation der Temperatur der erwärmten Luft aufgewendet wird, ausgehend von einem von einem Fahrzeuginsassen vorwählbaren Grundwert in Abhängigkeit von der Fahrzeuggeschwindigkeit eingestellt. Dieser Grundwert kann auch zusätzlich oder anstelle einer manuellen Eingabe automatisch von der Steuereinheit oder von einer Klimaanlage in Abhängigkeit von einem äußeren Parameter, wie beispielsweise der Außentemperatur oder dem Öffnungsgrad eines Verdecks oder eines Fensters, eingestellt werden. In diesem Fall weist die Steuereinheit 2 jedem Grundwert bzw. jeder Komfortstufe geschwindigkeitsabhängige Heizleistungswerte zu. Jedoch ist die vorliegende Erfindung nicht auf die Verwendung exakter Heizleistungswerte beschränkt. Alternativ kann beispielsweise für jede Komfortstufe eine bestimmte Heizleistung als Grundwert und für jeden Grundwert Korrekturwerte, die angeben wie der Grundwert in Abhängigkeit von der Fahrzeuggeschwindigkeit erniedrigt oder erhöht werden muss, gespeichert werden. Auch ist es möglich exakte Temperaturwerte lediglich für eine Komfortstufe zu speichern und für die anderen Komfortstufen Korrekturwerte zu verwenden, die angeben, wie die gespeicherten Temperaturen in Abhängigkeit von der ausgewählten Komfortstufe angepasst werden müssen. Jedoch ist es dem Fachmann klar, dass eine Mehrzahl von Möglichkeiten existiert, die Heizleistung ausgehen von einem oder mehreren Grundwert geschwindigkeitsabhängig zu variieren.

Wie zuvor beschrieben, ist ein wichtiges Merkmal der vorliegenden Erfindung, dass der Luftdurchsatz durch die Zusatzheizung nicht geschwindigkeitsabhängig variiert wird. Jedoch bedeutet dieses Merkmal nicht, dass die vorliegende Erfindung eine Variation der Luftstromstärke gänzlich ausschließt.

Moderne Belüftungssysteme bieten beispielsweise eine Reihe von Gebläsestufen an, die von einem Fahrzeuginsassen ausgewählt werden können. Auch kann es während der Fahrt vorkommen, dass die Lüftung manuell oder automatisch von Frischluftbetrieb auf Umlaufbetrieb umstellt, wodurch es zu Änderungen der Stärke des von einem Gebläse in den Fahrgastraum geblasenen Luftstromes kommen kann.

Um derartige Variationen der Luftstromstärke zu berücksichtigen, wird vorzugsweise der Grundwert der Heizleistung auf die manuell oder eventuell automatisch gewählte Luftstromstärke angepasst, um eine Änderung der Temperatur der ausströmenden Luft bei Variation des Luftdurchsatzes zu verhindern. Somit führt eine Variation der Komfortstufe der Belüftung zu einer entsprechenden Veränderung der aufzubringenden Heizleistung.

Um Trägheitseffekte bei einem Lastwechsel, d.h. bei einer nicht kontinuierlichen Änderung der vom Heizelement zu erbringende Leistung, zu kompensieren, wird vorzugsweise die vom Heizelement 3 aufgebrachte Heizleistung so gesteuert, dass diese bei einem Lastwechsel zunächst für eine bestimmte Zeit vom vorgesehenen Sollwert abweicht.

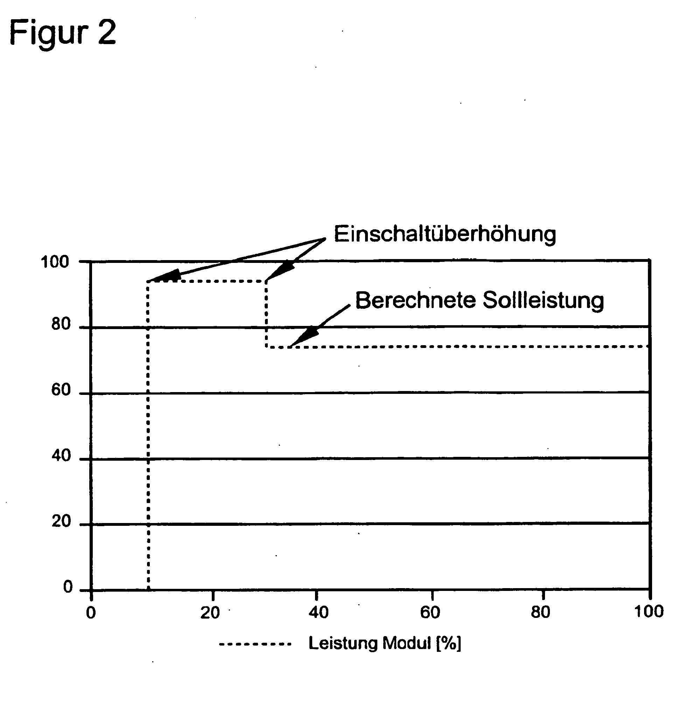

Figur 2 zeigt einen beispielhaften zeitlichen Verlauf der von einem Heizelement 3 aufgebrachten Heizleistung bei einer Erhöhung der Luftstromstärke und einer damit verbunden Erhöhung der aufzubringenden Heizleistung. Um eine schnellere Erwärmung der austretenden Luft zu erreichen und zur Kompensation der Trägheit des Heizelementes wird bei einem positiven Lastwechsel, z.B. einer Erhöhung der Komfortstufe, das Heizelement kurzzeitig mit einer höheren Heizenergie versorgt, als der gegenwärtigen Fahrzeuggeschwindigkeit zugeordnet ist. Durch die Wahl einer höheren Heizleistung wird erreicht, dass sich die Luft trotz der Trägheit wie gewünscht erwärmt.

In gleicher Weise wird die Steuereinheit 2 so konfiguriert, dass für das Heizelement bei einem negativen Lastwechsel, z.B. einer Erniedrigung der Komfortstufe, eine niedrigere Heizenergie gewählt wird, als für die jeweilige Fahrzeuggeschwindigkeit vorgesehen ist. Durch die Wahl einer niedrigeren Heizleistung wird eine eventuelle Temperaturerhöhung der Ausblastemperatur durch die in der thermischen Masse des Heizelementes gespeicherte Energie, aufgrund eines niedrigeren Luftdurchsatzes abgefangen. Durch die Verringerung der aufzubringenden Heizleistung bei negativen Lastwechsel, wird somit ein Überschwingen der Ausblastemperatur und ein dadurch verursachter Übertemperierungseffekt vermieden.

Vorzugsweise werden das oder die Heizelemente über eine Puls-Weiten-Modulation (PWM) angesteuert. Die Heizleistung wird über das Tastverhältnis eingestellt. Bei einem Lastwechsel wird dieses Tastverhältnis kurzzeitig entweder erhöht (bei positivem Lastwechsel, wenn in eine höhere Komfortsstufe geschaltet wird) oder erniedrigt (bei negativem Lastwechsel, also Umschaltung auf eine niedrigere Komfortstufe). Jedoch ist die exakte Steuerung der zeitlichen Erhöhung bzw. Erniedrigung des Tastverhältnisses theoretisch schwer zu erfassen. Deshalb wird sie vorzugsweise je nach Anforderung fahrzeugabhängig empirisch ermittelt.

Auch wenn die in Figur 2 dargestellte Einschaltüberhöhung während der gewählten Zeitspanne einen konstanten Wert annimmt, ist eine solche Wahl nicht zwingend. Auch kann eine zeitlich variable Einschalterhöhung verwendet werden, die von einem Anfangswert ausgehen kontinuierlich oder stufenweise auf die der Geschwindigkeit zugeordnete Heizleistung absinkt. In gleicher Weise kann für die Einschalterniedrigung ein konstanter Wert oder ein zeitliche variabler Wert, der sich von einem Anfangswert auf die Heizleistung erhöht, verwendet werden.

Da die Stärke des Luftstroms nicht in Abhängigkeit von der Fahrzeuggeschwindigkeit geregelt wird, kommt es zu einem Wechsel der Luftstromstärke äußerst selten. Somit treten im Gegensatz zu herkömmlichen Zusatzheizungen Temperaturüberschwingungen kaum noch auf. Wenn, dann lassen sich diese durch den Einsatz der oben beschriebenen Einschalterhöhung bzw. -Erniedrigung vermeiden.

In der bisher beschriebenen Steuerung der Temperatur der ausströmenden Warmluft wurde die Temperatur der anströmenden Luft nicht berücksichtigt. Eine Verbesserung der geschwindigkeitsabhängigen Anpassung der Warmlufttemperatur lässt sich durch eine Berücksichtigung der Kaltlufttemperatur der zu erwärmenden Luft erzielen.

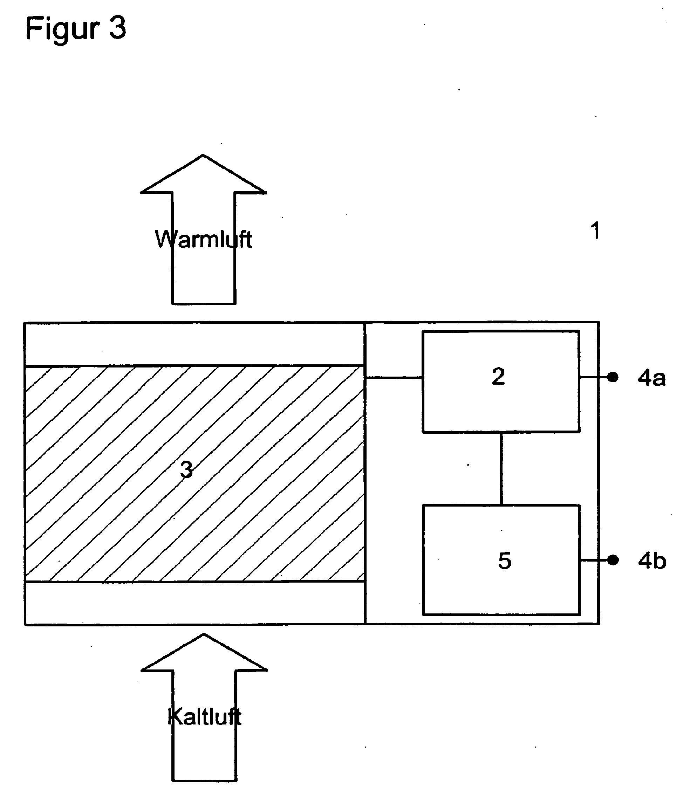

Figur 3 zeigt den schematischen Aufbau der elektrischen Zusatzheizung die neben der Steuereinheit 2 und dem PTC-Heizelement 3 eine Temperaturbestimmungseinheit 5 umfasst. Die Temperaturbestimmungseinheit 5 ist mit der Steuereinheit 2 verbunden und liefert an diese einen Temperaturwert, der die Temperatur der das Heizelement 3 anströmenden Kaltluft widerspiegelt und zur Ermittlung der Heizleistung des PTC-Heizelements verwendet wird.

Um die Zusatzheizung 1 mit anderen Komponenten in einem Fahrzeug zu verbinden, weist die Zusatzheizung 1 Anschlüsse 4a und 4b auf. So kann z.B. die Temperaturbestimmungseinheit 5 mittels Anschluss 4b mit einem im oder am Fahrzeug befindlichen Temperatursensor verbunden werden. Auch ist es möglich, das Verhalten der Steuereinheit über Anschluss 4a zu beeinflussen. So können über diesen Anschluss beispielsweise benutzerdefinierte Vorgaben oder Signale anderer Fahrzeugkomponenten an die Steuereinheit 2 weitergegeben werden.

Die Verbindung der Zusatzheizung 1 mit externen Geräten des Fahrzeugs kann dabei wie zuvor beschrieben direkt in analoger oder digitaler Weise oder durch einen Datenbus erfolgen. So kann beispielsweise die Temperaturbestimmungseinheit 5 einen Temperaturwert einer im Fahrzeug befindlichen Klimaanlage oder eines im Luftkanal angebrachten Sensors über den Bus erhalten und basierend auf dem erhaltenen Wert die Kaltlufttemperatur der zu erwärmenden Luft ermitteln.

Auch ist es möglich über die Anschlüsse 4a und 4b die Steuereinheit 2 bzw. die Temperaturbestimmungseinheit 5 zu aktualisieren oder zu warten. Jedoch ist dem Fachmann klar, dass die oben beschriebene Verwendung der Anschlüsse lediglich Beispiele sind und die Anschlüsse eine Vielzahl von Möglichkeiten zur Einflussnahme auf die Zusatzheizung bieten. Auch ist es nicht nötig die Zusatzheizung mit zwei separaten Anschlüsse auszustatten. So kann die Zusatzheizung lediglich einen mit der Steuereinheit 2 verbunden Anschluss 4a aufweisen über den die Steuereinheit 2 Daten erhält. Die von der Temperaturbestimmungseinheit 5 benötigten Daten werden in diesem Fall - falls erforderlich - von der Steuereinheit 2 an die Temperaturbestimmungseinheit 5 weitergeleitet.

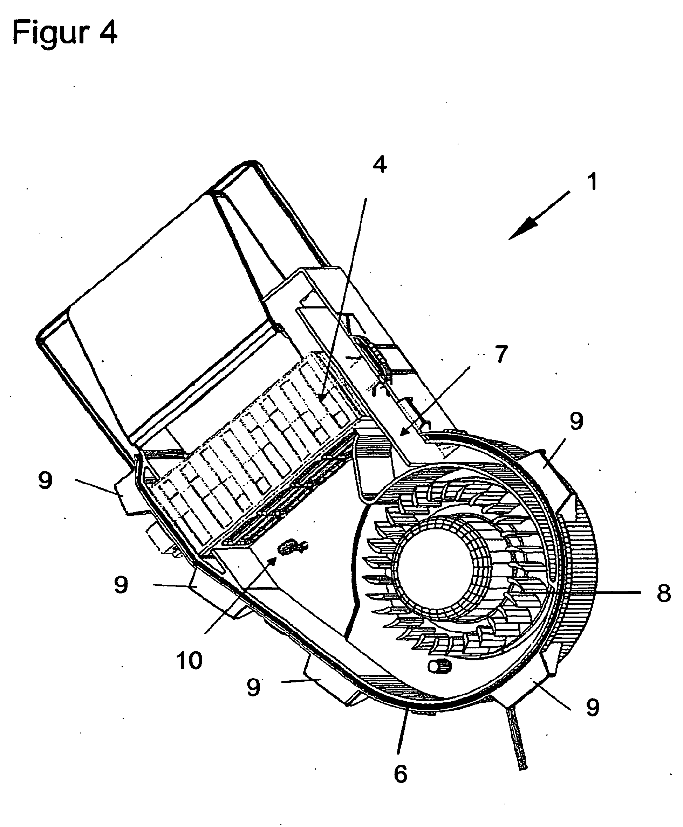

In Figur 4 ist eine elektrische Zusatzheizung gemäß der vorliegenden Erfindung mit zusätzlichem Gebläse näher dargestellt, welches - gemäß einer Ausführungsform der Erfindung - einen Temperatursensor zur Messung der Kaltlufttemperatur aufweist. Wie zuvor beschrieben ist der Einsatz eines solchen Temperatursensors jedoch nicht unbedingt erforderlich

Die Zusatzheizung 1 besteht aus einem aus einem flachen Kasten 6 in dem nebeneinander ein Heizelement 3, eine Platine mit einer elektronischen Steuerung 7, in der die Steuereinheit 2 und die Temperaturbestimmungseinheit 5 integriert sind, ein Radialgebläse 8 und ein Temperatursensor 10 angeordnet sind. Am Außenumfang des Kastens 6 ist zusätzlich eine Anzahl von Befestigungslaschen 9 vorgesehen, die dazu dienen, den Kasten 6 mit entsprechenden Gegenstücken im Stützkörper des Fahrzeugs zu verbinden. Der Temperatursensor 10 ist im Kaltlufttrakt vorgesehen und mit der elektronischen Steuerung 7 verbunden. Die elektronische Steuerung 7 ist weiterhin über nicht näher dargestellte Leitungen mit dem Kraftfahrzeugbordnetz, dem Radialgebläse 8, oder entsprechenden vorzugsweise im Sitzoder Armaturenbereich angebrachten Steuerelementen verbunden. Über diese Steuerelemente lassen sich beispielsweise die Warmlufttemperatur und/oder die Gebläsedrehzahl unabhängig voneinander einstellen. Außerdem kann die Steuerung 7 zusätzlich oder anstelle des Temperatursensors 10 mit einem Kraftfahrzeugbus verbunden sein, welcher der Steuerung 7 im Fahrzeug vorhandene Umgebungsparameter wie beispielsweise die Innentemperatur, die Außentemperatur, die Fahrzeuggeschwindigkeit, den Verdeckzustand (offen/geschlossen) etc. bereitstellt.

Figur 4 verdeutlicht in anschaulicher Weise die vielen Einsatzmöglichkeiten der vorliegenden Erfindung. Zusatzheizungen wie in Figur 4 dargestellt werden an zahlreichen Stellen im Fahrzeug eingesetzt. So werden Zusatzheizungen im Armaturenbrett oder im Sitz-, Rücken- und Nackenbereich von Fahrzeugsitzen eingebaut. Auch enthalten heutige Fahrzeuge zur Komfortsteigerung mehrere Gebläse- oder Heizmodule. Da die vorliegenden Erfindung die Temperatur der anströmenden Luft für jedes einzelne der im Fahrzeug integrierten Heizelemente jeweils individuell ermittelt, kann jedes Heizelement autark operieren und somit dezentral eingesetzt werden.

Eine mögliche Ausführungsform der Verwendung der Zusatzheizung gemäß der vorliegenden Erfindung zur Beheizung eines Kraftfahrzeugsitzes ist in Figur 5 dargstellt. Der Kraftfahrzeugsitz 11 weist in üblicher Form ein Sitzpolsterteil 12 und eine Rückenlehne 13 auf. Sowohl das Sitzpolsterteil 12, als auch die Rückenlehne 13 bestehen im wesentlichen aus einem Stützkörper besonders vorteilhaft aus Hartschaumstoff, beispielsweise Polyurethan, aber auch als Federkernsitz, in dem die erforderlichen Befestigungsschienen und -rahmen integriert sind. Auf die Oberfläche des Hartschaumstoffs ist beispielsweise ein Gewirke 14 aufgeklebt auf dem der äußere Bezug 15, beispielsweise Velour oder Leder, liegt.

In den Hartschaumstoff sind im in Figur 5 dargestellten Beispiel Luftströmungskanäle 16 vorgesehen, die in einer Kammer münden und auf ihren gesamten Längen zu dem Gewirke 14 hin offen sind. Auf der Rückseite des Sitzpolsterteils 12 bzw. der Rückenlehne 13 sind Zusatzheizungen 6 in dafür vorgesehen Öffnungen platziert. Durch die Luftkanäle 16 wird die von den Zusatzheizungen erwärmte Luft an die Fahrzeuginsassen weitergeleitet. Auch wenn in Figur 5 lediglich Heizungen für die Sitz- und Rückenteile des Sitzes abgebildet sind, so kann die Zusatzheizung der vorliegenden Erfindung in gleicher Weise in Sitzen verwendet werden, die einen Luftkanal (oder auch mehrere) zum Erwärmen des Nackenbereiches des Fahrzeuginsassen aufweisen. In diesem Fall können beispielsweise nicht nur eine, sondern auch drei Zusatzheizungen zum Einsatz kommen, die jeweils den Sitz-, Rücken- oder Nackenbereich des Sitzinsassen mit warmer Luft versorgen. Außerdem kann die Zusatzheizung außerhalb des Sitzes beispielsweise zur Beheizung des Fondbereichs eine Kraftfahrzeugs eingesetzt werden.

Beim Einsatz mehrerer Zusatzheizungen in einem Fahrzeug ist es jedoch nicht nötig jedes einzelne Heizelement 3 mit einer elektronischen Steuerung 7 zu versehen. Zur Reduzierung der Kosten kann das Fahrzeug mit nur einer einzigen elektronischen Steuerung versehen werden, welche mit den einzelnen Heizelementen, z.B. über einen Bus oder analog, verbunden ist und die vom jeweiligen Heizelement aufzubringende Heizleistung individuell einstellt.

Auch ist es nicht nötig, dass jedes einzelne Heizelement mit einem separaten Gebläse 8 versehen bzw. verbunden ist. Zur Reduzierung der Kosten und des Fahrzeuggewichts, können mehrere Heizelemente mit einem einzigen Gebläse 8 verbunden sein, welches die einzelnen Heizelemente mit Luft versorgt. Die erfindungsgemäße Zusatzheizung kann beispielsweise in Luftkanälen angeordnet werden, die Luft von einem zentralen Gebläse an weiter hinten im Fahrzeug angeordnete Ausströmer führen. Ein individuelles Gebläse ist in solchen Fällen nicht erforderlich. Auch kann beispielsweise ein Fahrzeugsitz lediglich einen oder mehrere Luftkanäle aufweisen, die mit einem externen Gebläse verbunden sind und in denen eine oder mehrere Zusatzheizungen gemäß der vorliegenden Erfindung vorgesehen sind. Die Parameter des der Heizung zugeführten Kaltluftstroms können beispielsweise vom zentralen Klimasystem bereitgestellt werden.

Wie bereits zuvor erwähnt ist die aufzuwendende Heizleistung gemäß einer Ausführungsform der vorliegenden Erfindung maßgeblich von der Kaltlufttemperatur der zu erwärmenden Luft abhängig. Die aufzuwendende Heizleistung lässt sich dabei mittels unterschiedlicher Verfahren bestimmen, beispielsweise mittels mathematischer Gleichungen, welche die Kaltlufttemperatur als Steuergröße enthalten. Dieser mathematische Rechenaufwand lässt sich bei Verwendung von Kennlinien bzw. Kennfeldern vermeiden. Bei dieser Methode zur Heizleistungsbestimmung werden beispielsweise experimentell durch Messungen an der Zusatzheizung Kennlinien bestimmt, welche die Abhängigkeit der Heizleistung von der Kaltlufttemperatur und der geschwindigkeitsabhängigen Warmlufttemperatur, und die im Betrieb eine jeweils optimale Anpassung der aus der Zusatzheizung strömenden Warmluft an die Fahrzeuggeschwindigkeit ermöglichen. Beide Bestimmungsmethoden können zur Verbesserung der Temperaturbestimmung auch miteinander kombiniert werden. So lassen sich beispielsweise Teilaspekte der mathematischen Berechnung, wie beispielsweise die Temperaturabhängigkeit von Parametern, leicht durch Kennfelder darstellen. Dadurch lässt sich der Berechnungsaufwand deutlich vereinfachen, da oft keine genauen Formeln für die Eigenschaften der Parameter existieren. Zusätzlich hat die Verwendung von Kennlinien den Vorteil, dass diese bei Bedarf aktualisierbar sind. So kann z.B. durch Neubestimmung der Kennlinien die Ermittlung der Kaltlufttemperatur bei verbesserten Messverfahren optimiert werden. Zusätzlich lässt sich damit die Steuerung der Heizleistung auf sich ändernde Eigenschaften der Zusatzheizung, z.B. deren eventuelle Verschmutzung, anpassen.

Um die oben und im Folgenden beschriebenen Funktionen auszuführen, kann beispielsweise in der Steuereinheit 2 und/oder der Temperaturbestimmungseinheit 5 eine Speichereinheit enthalten sein (nicht dargestellt), die Steuerprogramme, Funktionsroutinen oder Kennlinien enthält, welche die Temperaturbestimmung und die Steuerung des Heizelements definieren. Zusätzlich ist in diesem Fall vorzugsweise in einer oder beiden Einheiten ein Prozessor vorgesehen, der die in der Speichereinheit gespeicherten Programme ausführt. Auch ist es möglich über Anschlüsse 4a und 4b die in den Speichereinheiten gespeicherten Daten zu aktualisieren.

Im Folgenden wird zunächst die mathematische Methode zur Berechnung der aufzubringenden Heizleistung vorgestellt. Für die Festlegung der aufzubringenden Heizleistung ist es zweckmäßig für die Temperatur der aus der Heizung strömenden Luft Warmlufttemperaturen vorzugeben und anschließend unter Berücksichtigung der Kaltlufttemperatur die Heizleistung zu bestimmen, die nötig ist um die ausströmenden Luft auf die gewünschte Warmlufttemperatur zu heizen.

Grundlage für dieses Verfahren bildet die Formel:

$$P = \dot{m} \cdot c_p \cdot \Delta T \qquad\qquad\qquad \text{(i)}$$

wobei P die abzugebenden Heizleistung, $m$ den durch das Heizelement strömenden Luftmassenstrom, $c_p$ die Wärmekapazität der Luft und $\Delta T := T_{Auslass} - T_{Kalt}$ die Differenz zwischen der geschwindigkeitsabhängigen Warmlufttemperatur $T_{Auslass}$, d.h. der erwünschten Temperatur der ausströmenden warmen Luft, und der Kaltlufttemperatur $T_{Kalt}$ darstellt.

Um die Effizienz der Aufnahme der Heizenergie von der zu erwärmenden Luft zu berücksichtigen, kann zusätzlich noch ein Effizienzfaktor $\alpha$ berücksichtigt werden. In diesem Fall lautet die Formel zur Berechnung der Heizleistung

$$P = \alpha \cdot \dot{m} \cdot c_p \cdot \Delta T \,. \qquad\qquad\qquad \text{(ii)}$$

Die zur Berechnung der Heizleistung benötigte Kaltlufttemperatur kann auf mehrere Arten bestimmt werden. Am einfachsten lässt sich dies mittels eines Temperatursensors zwischen Gebläse und Heizelement realisieren, der die Temperatur der zu erwärmenden anströmenden Luft misst. Jedoch ist der Einsatz eines solchen Sensors nicht nötig, da eine Vielzahl von im Fahrzeug eingebauten Geräten Temperaturen im oder am Fahrzeug messen. So misst z.B. eine im Fahrzeug eingebaute Klimaanlage eine Temperatur, die Rückschlüsse auf die Temperatur im inneren des Fahrzeugs erlaubt. Saugt das Gebläse, das die Zusatzheizung mit Luft versorgt, z.B. bei Umlaufbetrieb, die Luft aus dem Innenraum des Fahrzeugs an, so bildet die von der Klimaanlage gemessene Temperatur einen guten Wert für der Kaltlufttemperatur. Wird die Luftversorgung in Durchlauf- bzw. Frischluftmodus betrieben, so wird die Luft nicht aus dem Fahrzeug sondern frische Luft von Außen angesaugt. In diesem Fall ist die von einem am Fahrzeug angebrachten Temperatursensor gemessene Außentemperatur ein gutes Maß für die Kaltlufttemperatur. Ausgehend von dieser Beobachtung verwendet die vorliegende Erfindung die von einem im oder am Fahrzeug befindlichen Temperatursensor gemessene Umgebungstemperatur $T_{Umgebung}$ zur Ermittlung der Kaltlufttemperatur.

Da die Umgebungstemperatur (im oder am Fahrzeug) meistens nicht genau mit der Kaltlufttemperatur (Ansaugtemperatur) übereinstimmt, kann zusätzlich ein Faktor F in die Berechnung eingebracht werden, der die Güte einer z.B. auf einem Bus liegenden Temperatur (z.B. der Innen- oder Außentemperatur) bewertet. Beispielsweise kann, falls keine Anpassung der auf dem Bus liegenden Temperatur nötig ist, $F = 1$ gewählt werden. Mittels des Gütefaktors, der beispielsweise Temperaturunterschiede zwischen Temperaturmessung und Kaltlufttemperatur wiedergibt, wird die Umgebungstemperatur korrigiert um die Kaltlufttemperatur zu erhalten:

$$T_{Kalt} = F \cdot T_{Umgebung} \cdot \qquad \text{(iii)}$$

In Formel (iii) wird davon ausgegangen, dass sich das Verhältnis zwischen der Umgebungstemperatur und der Kaltlufttemperatur über einen Faktor bestimmen lässt. Jedoch ist eine solche eindeutige Abhängigkeit nicht immer gegeben. Daneben ist es auch möglich, dass sich die Kaltlufttemperatur von der Umgebungstemperatur immer um einen gewissen Differenzwert unterscheidet. Um eine solche Beziehung zwischen der Umgebungs- und der Kaltlufttemperatur zu berücksichtigen, verwendet die vorliegende Erfindung alternativ einen additiven Korrekturfaktor $f$ wie es in folgender Formel dargestellt ist:

$$T_{Kalt} = T_{Umgebung} + f \cdot \qquad \text{(iv)}$$

Um zusätzlich die zeitliche Variation der Abweichung der Umgebungstemperatur von der Kaltlufttemperatur zu berücksichtigen, können die Korrekturfaktoren auch zeitabhängig sein. Eine solche Zeitabhängigkeit tritt zum Beispiel auf, falls die Umgebungstemperatur z.B. am Armaturenbrett oder an der Mittelkonsole gemessen wird, die sehr schnell auf eine bestimmte Temperatur erwärmt werden, während die Luft beispielsweise in der Bodennähe des Innenraums angesaugt wird und sich erst langsam auf die Temperatur der Konsole erwärmt. Auch kann die Kaltlufttemperatur durch Kombination der Korrekturfaktoren $F$ und $f$ wie folgt bestimmt werden

$$T_{Kalt} = F(t) \cdot T_{Umgebung} + f(t) \cdot \qquad \text{(v)}$$

Bisher wurde die Kaltlufttemperatur lediglich aus einer im oder am Fahrzeug gemessenen Temperatur bestimmt. Jedoch kann die Ermittlung der Kaltlufttemperatur durch Verwendung mehrerer Temperaturen verbessert werden.

Zur Bestimmung der Kaltlufttemperatur aus mehreren Temperaturwerten werden Gewichtungsfaktoren bzw. Korrelationsfaktoren verwendet, die den Einfluss der einzelnen Temperaturen auf die Kaltlufttemperatur ausdrücken. Vorzugsweise ergibt die Summe aus den Faktoren 1. Dabei können diese Korrelationsfaktoren sowohl zeitlich konstant als auch zeitlich veränderbar sein. Dies ermöglicht eine Bewertung der Güte der vom Fahrzeug bereitgestellten Werte.

Eine Korrelation/Gewichtung mehrerer Temperaturwerte wird im Folgenden beispielhaft anhand einer Kombination zwischen einer gemessenen Innenraum- und der Außentemperatur dargestellt.

Beim Start eines Fahrzeuges und/oder beim Anschalten eines Heizmoduls findet in der Regel ein Abgleich zwischen Innen- und Außentemperatur statt. Herrscht z.B. im Fahrzeug bei geschlossenem Verdeck oder bei geschlossenen Fenstern eine Innenraumtemperatur von 18 °C, während die Außentemperatur 10 °C beträgt, so erfolgt bei Öffnen des Verdecks oder eines Fensters eine Angleichung der Temperaturen auf einen Wert zwischen den beiden Temperaturen, welcher zu bewerten ist.

Die Temperatur der das Heizelement anströmenden Luft lässt sich durch folgende Formel bestimmen

$$T_{Kalt} = F_{Außen}(t) \cdot T_{Außen} + F_{Innen}(t) \cdot T_{Innen} \cdot \qquad \text{(vi)}$$

Wie zu erkennen ist, wird der Einfluss der Außen- bzw. der Innentemperatur durch Wahl geeigneter Korrekturfaktoren berücksichtigt, die in diesem Beispiel zeitabhängig sind. Auch kann zusätzlich noch ein additiver Korrekturfaktor hinzugefügt werden, der weitere Variationen wiedergibt.

In den oben aufgeführten Formeln treten eine Vielzahl von Korrekturfaktoren auf, für deren mathematische Beschreibung oft keine genauen funktionellen Zusammenhänge bekannt sind. Insbesondere sind die exakten Werte der Korrekturfaktoren fahrzeugspezifisch und ändern sich unter Umständen mit dem Alter des Fahrzeugs bzw. der Zusatzheizung. Um für die Korrekturfaktoren trotzdem genaue Werte oder die Zeitabhängigkeit der Faktoren zu verwenden, speichert die Temperaturbestimmungseinheit 5 vorzugsweise Kennlinien, welche die Abhängigkeiten der einzelnen Faktoren erfassen. Diese Kennlinien bzw. Kennfelder werden durch Messreihen empirisch bestimmt. So können für jeden Fahrzeugtyp individuelle Werte bestimmt werden, wodurch sich die Steuerung der Heizleistung optimal auf das Fahrzeug anpassen lässt.

Wie aus Formel (i) ersichtlich, lässt sich die exakte Temperatur der aus der Zusatzheizung strömenden Warmluft genau festlegen, wodurch die Geschwindigkeitsabhängigkeit der ausströmenden Warmluft genau eingestellt werden kann. Die dazu nötige Anpassung der Heizleistung an die Kaltlufttemperatur und die Fahrzeuggeschwindigkeit kann auf mehrere Arten erfolgen. Beispielsweise können in der Speichereinheit bzw. in einer der Speichereinheiten eine Wertetabelle oder eine Funktion hinterlegt sein, die bestimmten Geschwindigkeits-Kaltlufttemperatur-Wertepaaren eine vorbestimmte Heizleistung zuordnet.

Auch kann lediglich eine Wertetabelle bzw. Funktion gespeichert sein, die für eine vorgewählte Fahrzeuggeschwindigkeit verschiedenen Werten der Kaltlufttemperatur jeweils eine bestimmte Heizleistung zuordnet. Die geschwindigkeitsabhängige Variation der Heizleistung kann in diesem Fall beispielsweise durch Korrekturwerte erfolgen, die angeben, wie die gespeicherten Werte der Heizleistung in Abhängigkeit von der Fahrzeuggeschwindigkeit korrigiert werden sollen. Jedoch ist es dem Fachmann klar, dass auch andere Wege existieren, die geschwindigkeits- und kaltlufttemperaturabhängige Steuerung der Heizleistung umzusetzen.

Tabelle 1 zeigt ein exemplarisches Beispiel, in dem Warmlufttemperaturen für drei Komfortstufen und vier verschiedene Geschwindigkeiten eingetragen sind.

Tabelle 1: Abhängigkeit der Warmlufttemperatur von der Fahrzeuggeschwindigkeit und der Komfortstufe.

| Geschwindigkeitsabhängigkeit der Warmlufttemperatur | | | | |
|---|---|---|---|---|
| Fahrzeuggeschwindigkeit | 0 km/h | 50 km/h | 90 km/h | 140 km/h |
| Stufe 1 | 25 °C | 30 °C | 35 °C | 40 °C |
| Stufe 2 | 30 °C | 35 °C | 40 °C | 45 °C |
| Stufe 3 | 35 °C | 40 °C | 45 °C | 50 °C |

Die Warmlufttemperatur bei Stillstand des Fahrzeugs dient hier als Grundwert für die Warmlufttemperatur, die in Abhängigkeit von der Fahrzeuggeschwindigkeit eingestellt wird. Wie aus Tabelle 1 ersichtlich ist, wird die zu erzielende Warmlufttemperatur vorzugsweise so gewählt, dass diese mit wachsender Fahrzeuggeschwindigkeit anwächst. In gleicher Weise wird die Warmlufttemperatur bei sinkender Fahrzeuggeschwindigkeit reduziert.

Auch wenn in Tabelle 1 nur Warmlufttemperaturen für bestimmte Geschwindigkeiten aufgeführt sind, bedeutet dies nicht, dass die vorliegende Erfindung auf eine stufenartige Anpassung der Warmlufttemperatur an die Fahrzeuggeschwindigkeit beschränkt ist. Auch ist es möglich, die Warmlufttemperatur ausgehend vom Grundwert kontinuierlich an die Geschwindigkeit des Fahrzeugs anzupassen. In einfacher Weise lässt sich dies umsetzen, indem man die Warmlufttemperatur ausgehende von einem Grundwert linear proportional zur Fahrzeuggeschwindigkeit variiert. Jedoch kann auch eine nicht lineare Abhängigkeit der Warmlufttemperatur von der Fahrzeuggeschwindigkeit verwendet werden.

Auch ist es dem Fachmann klar, das die in Tabelle 1 dargestellte und zuvor beschriebenen Verfahren zur geschwindigkeitsabhängigen Steuerung der Warmlufttemperatur lediglich Beispiele sind und eine Fülle von möglichen Realisierungen dieser Steuerung existieren.

Eine von der Zusatzheizung 1 vorgegebene Geschwindigkeitsabhängigkeit der Warmlufttemperatur reicht dem Komfortbedürfnis eines Fahrzeuginsassen oft nicht aus. Insbesondere ist es für den Fahrzeuginsassen oft wichtig, die Warmlufttemperatur der aus der Heizung strömenden Luft möglichst exakt dem eigenem Komfortbedürfnis anpassen zu können.

Um diesem Bedürfnis Rechnung zu tragen, berücksichtigt die Steuereinheit der Zusatzheizung vorzugsweise einen Temperaturvorgabewert, der aus einem von einem externen Eingabegerät empfangen Wert ermittelt und zur Regelung der Geschwindigkeitsabhängigkeit der Warmlufttemperatur verwendet wird.

Der erhaltene Temperaturvorgabewert dient als Grundwert für die Warmlufttemperatur, die anschließend ausgehend vom durch den Temperaturvorgabewert festgelegten Grundwert in Abhängigkeit von der Fahrzeuggeschwindigkeit verändert wird. Der Temperaturvorgabewert kann dabei auf verschiedene Arten erzeugt werden. Beispielsweise kann der Benutzer einen exakten Temperaturwert eingeben, welcher der Steuereinheit 2 als Temperaturvorgabewert übermittelt wird. Beim Erhalten eines Temperaturvorgabewertes ermittelt die Steuereinheit 2 die aktuelle Fahrzeuggeschwindigkeit und verwendet die Temperaturvorgabewert-Fahrzeuggeschwindigkeit-Kombination als Grundwert für die geschwindigkeitsabhängige Regelung der Warmlufttemperatur, von dem ausgehend die Warmlufttemperatur bei Verringerung der Geschwindigkeit reduziert und bei Zunahme der Geschwindigkeit erhöht wird. In diesem Fall lässt sich der Grundwert der Warmlufttemperatur vom Fahrzeuginsassen kontinuierlich und individuell variieren bzw. einstellen.

Zusätzlich ist die vorliegende Erfindung nicht auf eine benutzerdefinierte Vorgabe eines Grundwertes beschränkt. Alternativ bzw. zusätzlich kann der Grundwert auch automatisch in Abhängigkeit eines äußeren Parameters, wie beispielsweise der Außentemperatur oder dem Öffnungsgrad eines Verdecks oder Fenster, festgelegt werden.

Unter Umständen können die oben beschriebenen mathematische Funktion bzw. Kennfelder nicht theoretisch bestimmt werden und müssen empirisch ermittelt werden. Auch kann eine Kombination aus mathematischer Funktion und gespeicherten Kennfeld zur Anpassung der Warmlufttemperatur verwendet werden. Durch geeignete Auswahl der Kennfelder ist es jedoch auch möglich gänzlich auf eine mathematische Beschreibung zur Steuerung der Zusatzheizung zu verzichten.

In einer weiteren bevorzugten Ausführungsform der vorliegenden Erfindung wird im Speicher der Steuereinheit bzw. der Temperaturbestimmungseinheit ein Kennfeld bzw. mehrere Kennfelder gespeichert, die in Abhängigkeit von Parametern wie der Kaltlufttemperatur, der Fahrzeuggeschwindigkeit und dergleichen angeben, welche Heizleistung vom Heizelement aufzubringen ist damit die aus der Heizung austretende Luft eine gewisse Warmlufttemperatur besitzt.

Zur Bestimmung der Kennfelder werden für eine Vielzahl von Ausgangsparametern wie z.B. der Kaklufttemperatur, der Größe des Luftmassenstroms, Offnungszustand der Fenster bzw. des Verdecks, Warmlufttemperatur und dergleichen, Messreihen durchgeführt um experimentell die Heizleistung zu bestimmen, die das Heizelement abgeben muss, um die kalte Luft auf eine Zieltemperatur aufzuheizen. Aufgrund der für ein Fahrzeug bzw. Fahrzeugtyp individuell bestimmten Charakteristiken, kann die Steuerung der Zusatzheizung individuell und exakt auf ein Fahrzeug bzw. einen Fahrzeugtyp angepasst werden.

Die Bestimmung der Kennfelder kann dabei auch in verschiedene Abschnitte getrennt werden. So kann z.B. der Hersteller der Zusatzheizung deren Eigenschaften im Werk experimentell ermitteln und in einem ersten Kennfeld speichern, wohingegen der Autohersteller anschließend ein zweites Kennfeld bestimmt, das die Einflüsse des Fahrzeugs erfasst.

Auch ist es nicht nötig, ein Kennfeld für jedes einzelne Fahrzeug zu bestimmen. Da die Abweichungen der Eigenschaften innerhalb eines Fahrzeugtyps bzw. eines Zusatzheizungstyps nur sehr gering sind, reicht es in der Regel aus, die Kennfelder lediglich für ein einziges Fahrzeug eines Fahrzeugtyps und eine einzige Zusatzheizung eines Zusatzheizungstyps zu bestimmen.

Zusätzlich erlaubt die Steuerung mittels Kennfelder eine einfache Modifikation der Steuereinheit bzw. der Temperaturbestimmungseinheit, da die in diesen Modulen/Speichereinheiten gespeicherten Daten leicht über Anschlüsse 4a und 4b aktualisiert werden können.

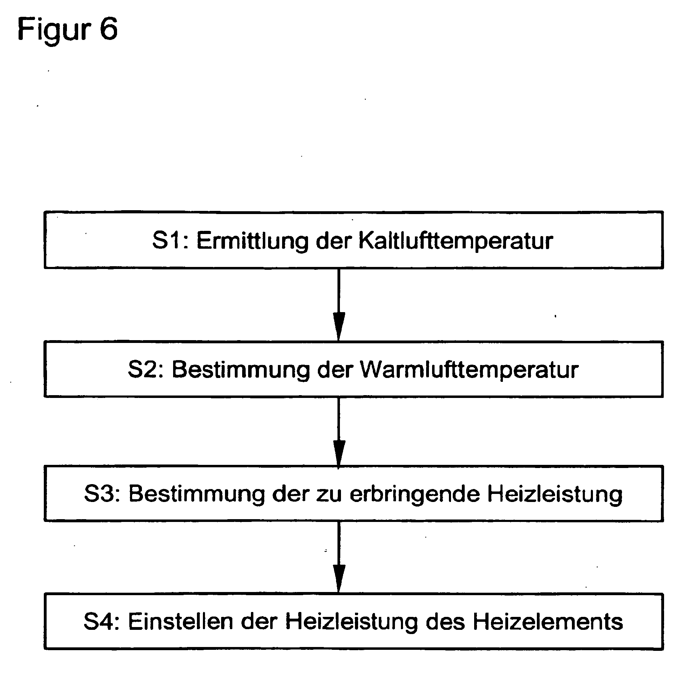

Figur 6 zeigt ein Ablaufdiagramm, welches das Grundprinzip der Steuerung der Zusatzheizung unter Berücksichtigung der Warmlufttemperatur verdeutlicht. Basierend auf der Fahrzeuggeschwindigkeit bzw. einem Parameter, der von der Fahrzeuggeschwindigkeit abhängt, z.B. der Raddrehzahl, wird in Schritt S1 die beabsichtigte Warmlufttemperatur der aus der Heizung strömenden Luft bestimmt. Daran anschließend wird in Schritt S2 die Temperatur der zu erwärmenden anströmenden Kaltluft ermittelt. Hierbei ist es dem Fachmann jedoch klar, dass es nicht nötig ist, die Warmlufttemperatur vor der Kaltlufttemperatur zu ermitteln. Vielmehr kann die Kaltlufttemperatur auch vor der Bestimmung der Warmlufttemperatur erfasst werden oder beide Größen können gleichzeitig bestimmt werden.

In Abhängigkeit der in Schritten S1 und S2 bestimmten Kalt- und Warmlufttemperatur wird in Schritt S3 die von Heizelement 3 zu erbringende Heizleistung bestimmt. Diese Heizleistung kann anhand der zuvor beschriebenen Formeln und/oder mittels gespeicherter Kennfelder erfolgen. Nach Ermittlung der aufzuwendenden Heizleistung wird im Schritt S4 die Heizleistung des Heizelements 3 eingestellt.

Durch die in Figur 6 dargestellte Steuerung wird der durch die Zusatzheizung strömende Luftstrom nicht verändert. Somit führt eine Erhöhung bzw. Erniedrigung der Heizleistung jeweils unmittelbar zu einer dementsprechenden Erhöhung bzw. Erniedrigung der Temperatur des aus der Zusatzheizung strömenden Luftstroms. Zusätzlich wird durch die Berücksichtigung der Kaltlufttemperatur erreicht, dass die ausströmende Warmluft genau auf eine gewünschte Warmlufttemperatur erhitzt wird. Dadurch werden unangenehme Überhitzungen des erwärmten Luftstroms sicher vermieden.

Da Kraftfahrzeugsheizungen in der Regel in Luftkanälen des Fahrzeugs angebracht werden und mittels Gebläsen mit Frischluft versorgt werden, kann es bei Blockaden des Luftein- oder -Auslasses oder beim Ausfall des Gebläses zu Überhitzungen kommen. Da sich in diesen Fällen der Luftmassenstrom verringert oder sich die Luft im Heizelement staut, erhitzt sich die im Luftkanal befindliche Luft bei gleich bleibender Heizleistung sehr stark auf. Unter Umständen kann deshalb die Temperatur der ausströmenden Warmluft 60 °C überschreiten.

Um Probleme durch Behinderungen des Luftstroms zu vermeiden, wird von der Steuereinheit vorzugsweise eine Fehlererkennung durchgeführt. Hierbei ist in der Steuereinheit eine Plausibilitätsprüfung implementiert, welche die Ist-Drehzahl des Lüfters mit der am Steuereingang des Lüfters anliegenden Spannung vergteicht. Da bei einer Verringerung der vom Lüfter umgesetzten Luftmasse, z.B. aufgrund einer Verstopfung des Lufteinlasses, eine geringere Spannung benötigt wird, um eine bestimmte Drehzahl zu erreichen, ist dieser Spannungswert ein geeigneter Indikator für Probleme im Luftkanal.

Deshalb wird, falls die Spannung, eventuell abzüglich einer festzulegenden Toleranzgrenze, zu weit heruntergeregelt werden muss um eine bestimmte Drehzahl einzustellen, von der Steuereinheit 2 ein geringer Wert des Luftmassenstroms zur Ermittlung der Heizleistung verwendet. Beispielsweise kann die Heizleistung um eine (Komfort-)Stufe zurückgeschaltet werden um dem reduzierten Luftmassenstrom zu kompensieren. Ist mit der Verringerung des Luftmassenstromwerts bzw. mit der damit verbunden Heizleistungsreduktion die Plausibilität immer noch nicht gegeben, wird der berücksichtigte Wert des Luftmassenstroms weiterhin verringert. Dies ist bis zum völligen Abschalten des Heizmoduls möglich.

Störungen im Luftkanal lassen sich jedoch auch direkt am Heizelement erkennen. PTC-Heizelemente besitzen einen temperaturabhängigen Ohmschen Widerstand, der mit steigender Temperatur des Heizelements ansteigt. Deshalb sinkt der durch das Heizelement fließende Strom bei konstanter Spannung, wenn sich das Heizelement erhitzt. Strömt Luft durch das Heizelement, so entzieht die Luft dem Heizelement Wärmeenergie; das Heizelement wird quasi gekühlt. Dadurch bleibt der elektrische Widerstand des Heizelements konstant, obwohl Heizleistung an die durch die Radioatorelemente strömende Luft abgeben wird. Deshalb muss bei einem kontinuierlichen Luftstrom über das PTC-Element der durch das Element fließende Strom über einem festzulegenden Wert liegen. Bei einem gestörten Luftstrom, z.B. bei Blockade oder bei einem fehlerhaften Lüfter, sinkt der Stromwert unterhalb der festgelegten Grenze (PTC-Effekt). Dies führt zu einem Abschalten des Heizelementes.

Auch wenn durch den oben beschriebenen PTC-Effekt das Heizelement passiv abgeschaltet wird, kann die ausströmende warme Luft vor dem Abschalten unter Umständen auf Temperaturen erwärmt werden, die vom Fahrzeuginsassen als unangenehm oder störend empfunden werden. Um dies zu vermeiden, wird vorzugsweise der Strom über dem Heizelement gemessen. Sinkt der Wert des Signals unter einen festgelegten Wert, so wird das Heizelement 3 von der Steuereinheit abgeschaltet.

Obwohl in den zuvor beschriebenen Ausführungsformen die Zusatzheizung 1 vorzugsweise eine separate Temperaturbestimmungseinheit 5 und Steuereinheit 2 aufweist, ist diese spezielle Ausführung für eine Zusatzheizung 1 gemäß der vorliegenden Erfindung nicht zwingend. Alternativ können die Funktionen auch in einem einzigen Bauteil integriert sein, das beispielsweise einen Speicher und einen Prozessor enthält, der die im Speicher gespeicherten Kontrollprogramme zur Temperaturbestimmungs- und Steuerroutinen zur Kontrolle des Heizelements verwendet.

Auch kann der Steuereinheit 2 zur Bestimmung des Einflusses des Fahrtwinds ein Signal zugeführt werden, dass Auskunft über den Verdeckstatus oder den Öffnungsgrad der Fenster enthält. So kann die Steuereinheit 2 mittels dieses Signals erkennen, ob das Verdeck oder Schiebedach geschlossen oder offen ist oder welche Fenster geöffnet und wie weit diese geöffnet sind.

Zusätzlich ist die vorliegender Erfindung nicht auf eine kontinuierliche Anpassung des Grundwerts der Heizleistung bzw. der Warmlufttemperatur auf äußere Parameter wie beispielsweise der Außentemperatur oder dem Verdeckstatus beschränkt. Die Anpassung des Grundwertes kann auch stufenweise erfolgen, so dass der Grundwert erst bei über- bzw. unterschreiten vorbestimmter Grenzwerte des äußeren Parameters auf die unter- bzw. überschrittene Grenze angepasst wird.

Zusammenfassend gibt die vorliegende Erfindung eine elektrische Zusatzheizung an, die Temperaturüberschwinger in der erwärmten Luft, insbesondere während Beschleunigungsphasen des Fahrzeuges, sicher vermeidet. Dazu wird in Abhängigkeit von der Fahrzeuggeschwindigkeit die Temperatur der ausströmenden Warmluft eingestellt. Diese Umsetzung erfolgt vorzugsweise über ein abgespeichertes Kennlinienfeld, das in einfacher Weise die Berücksichtigung einer Mehrzahl von Fahrzeugparametern wie der Geschwindigkeit des Fahrzeugs, des Öffnungszustandes des Verdecks, der Außentemperatur usw. zulässt. Dabei kann auch die Temperatur der einströmenden Luft basierend auf im Fahrzeug schon vorhandenen Temperaturwerten hergeleitet werden. Auf diese Weise kann sehr einfach eine benutzerfreundliche elektrische Heizung realisiert werden, die sich bevorzugt dezentral im Fahrzeug einsetzen lässt, beispielsweise im Kraftfahrzeugsitz oder im Fahrzeugfond. Auch bei sich dynamisch ändernden Betriebszuständen des Kraftfahrzeugs können Temperaturschwankungen in der erwärmten Luft sicher und in einfacher Weise vermieden werden.

**Patentansprüche**

1. Elektrische Zusatzheizung für ein Kraftfahrzeug mit wenigstens einem Heizelement (3) zur Erwärmung der durch die Zusatzheizung strömenden Luft und einer Steuereinheit (2) zur Einstellung der Heizleistung des wenigstens einen Heizelements (3), umfassend
eine Temperaturbestimmungseinheit (5), welche die Kaltlufttemperatur der durch die Zusatzheizung strömenden und von der Zusatzheizung zu erwärmenden Luft ermittelt, und
ein Gebläse (8), das dem Heizelement (3) die zu erwärmende Luft zuführt, wobei die Steuereinheit (2) die Heizleistung in Abhängigkeit von der ermittelten Kaltlufttemperatur einstellt, und

die Temperatur der aus der Zusatzheizung strömenden,
erwärmten Luft in Abhängigkeit von der Fahrzeuggeschwindigkeit einstellt
**dadurch gekennzeichnet, dass**
das Heizelement (3) ein PTC-Heizelement ist,
das Gebläse (8) einen Luftstrom konstanter Stärke erzeugt.

2.  Elektrische Zusatzheizung nach Anspruch 1, wobei die Steuereinheit (2) ausgehend von einem Grundwert die Heizleistung zur Variation der Temperatur der erwärmten Luft in Abhängigkeit von der Geschwindigkeit einstellt.

3.  Elektrische Zusatzheizung nach Anspruch 2, wobei der Grundwert vorwählbar ist oder automatisch in Abhängigkeit von einem äußeren Parameter eingestellt wird.

4.  Elektrische Zusatzheizung nach Anspruch 2 oder 3, wobei die Steuereinheit den Grundwert in Abhängigkeit von der Außentemperatur einstellt.

5.  Elektrische Zusatzheizung nach einem der Ansprüche 2 bis 4, wobei der Grundwert in Abhängigkeit vom vorwählbaren Luftdurchsatz der Zusatzheizung eingestellt wird.

6.  Elektrische Zusatzheizung nach einem der Ansprüche 1 bis 4, wobei die Steuereinheit (2) einen Speicher zur Abspeicherung eines Kennfeldes umfasst, das die Abhängigkeit der Heizleistung zur Variation der Temperatur der erwärmten Luft von der Fahrzeuggeschwindigkeit angibt.

7.  Elektrische Zusatzheizung nach einem der Ansprüche 1 bis 6, wobei die Temperaturbestimmungseinheit (5) die Kaltlufttemperatur basierend auf wenigstens einem gemessenen Temperaturwert ermittelt.

8.  Elektrische Zusatzheizung nach Anspruch 7, wobei die Temperaturbestimmungseinheit (5) die Kaltlufttemperatur zusätzlich basierend auf wenigstens einem Korrekturfaktor für den gemessenen Temperaturwert ermittelt.

9.  Elektrische Zusatzheizung nach Anspruch 8, wobei der Korrekturfaktor den Unterschied zwischen der gemessenen Temperaturmessung und der zu ermittelnden Kaltlufttemperatur korrigiert.

10. Elektrische Zusatzheizung nach Anspruch 8 oder 9, wobei der Korrekturfaktor eine zeitliche Variation der Kaltlufttemperatur gegenüber dem gemessenen Temperaturwert korrigiert.

11. Elektrische Zusatzheizung nach einem der Ansprüche 8 bis 10, wobei der gemessene Temperaturwert eine Fahrzeuginnentemperatur und/oder Fahrzeugaußentemperatur angibt.

12. Elektrische Zusatzheizung nach Anspruch 11, wobei die Kaltlufttemperatur aus einer gewichteten Kombination einer Fahrzeuginnenraum- und der Fahrzeugaußentemperatur bestimmt wird.

13. Elektrische Zusatzheizung nach einem der Ansprüche 7 bis 12, wobei der gemessene Temperaturwert von einer Kraftfahrzeugklimaanlage zur Verfügung gestellt wird.

14. Elektrische Zusatzheizung nach Anspruch 7 oder 8, mit einem Sensor (10) zur Temperaturmessung, der zwischen einem Gebläse (8) zur Zuführung der zu erwärmenden Luft und dem Heizelement (3) angeordnet ist.

15. Elektrische Zusatzheizung nach einem der Ansprüche 1 bis 14, wobei die Steuereinheit (2) einen Speicher mit einem in dem Speicher abgespeicherten Kennfeld umfasst, das die Abhängigkeit der aufzubringenden Heizleistung von Eingangsgrößen beschreibt, und die Steuereinheit (2) die zu erbringenden Heizleistung gemäß den Werten des Kennfelds einstellt.

16. Elektrische Zusatzheizung nach einem der Ansprüche 1 bis 15, wobei die Stärke des Luftstroms von einem Benutzer wählbar ist.

17. Kraftfahrzeugsitz mit einem Luftkanal, der wenigstens eine im oberen Bereich des Sitzes vorgesehene Luftausströmöffnung zum Versorgen des Kopf-, Schulter-oder Nackenbereiches eines Fahrzeuginsassen und eine elektrische Zusatzheizung (1) nach einem der Ansprüche 1 bis 16 aufweist, welche die durch den Luftkanal strömende Luft erwärmt.

18. Verfahren zum Steuern einer elektrischen Zusatzheizung (1) für ein Kraftfahrzeug, wobei die Zusatzheizung wenigstens ein Heizelement (3) zur Erwärmung der durch die Zusatzheizung (1) strömenden Luft umfasst, mit den Schritten:

Erzeugen eines Luftstroms,
Ermitteln (S1) der Kaltlufttemperatur der durch die Zusatzheizung strömenden und der von der Zusatzheizung (1) zu erwärmenden Luft, und
Einstellen (S3,S4) der vom Heizelement zu erbringenden Heizleistung in Abhängigkeit von der ermittelten Kaltlufttemperatur, .
Einstellen der Temperatur der aus der Zusatzheizung strömenden erwärmten Luft in Abhängigkeit von der Fahrzeuggeschwindigkeit,
**dadurch gekennzeichnet, dass**
das Heizelement (3) ein PTC-Heizelement ist,
der Luftstrom eine konstante Stärke besitzt.

19. Verfahren nach Anspruch 18, wobei ausgehend von einem Grundwert die Heizleistung zur Variation der Temperatur der erwärmten Luft in Abhängigkeit von der Geschwindigkeit eingestellt wird.

20. Verfahren nach Anspruch 19, wobei der Grundwert vorgewählt oder in Abhängigkeit von einem äußeren Parameter eingestellt wird.

21. Verfahren nach Anspruch 20, wobei der Grundwert in Abhängigkeit von der Außentemperatur eingestellt wird.

22. Verfahren nach einem der Ansprüche 19 bis 21, wobei der Grundwert in Abhängigkeit vom vorwählbaren Luftdurchsatz der Zusatzheizung (1) eingestellt wird.

23. Verfahren nach einem der Ansprüche 19 bis 21, wobei zum Einstellen der Heizleistung ein Kennfeld, das die Abhängigkeit der Heizleistung zur Variation der Temperatur der erwärmten Luft von der Fahrzeuggeschwindigkeit angibt, verwendet wird.

24. Verfahren nach Anspruch einem der Ansprüche 18 bis 23, wobei die Kaltlufttemperatur basierend auf wenigstens einem gemessenen Temperaturwert ermittelt wird.

25. Verfahren nach Anspruch 24, wobei die Kattlufttemperatur zusätzlich basierend auf wenigstens einem Korrekturfaktor für den gemessenen Temperaturwert ermittelt wird.

26. Verfahren nach Anspruch 25, wobei der Korrekturfaktor den Unterschied zwischen der gemessenen Temperatur und der zu ermittelnden Kaltlufttemperatur korrigiert.

27. Verfahren nach einem der Ansprüche 25 oder 26, wobei der Korrekturfaktor eine zeitliche Variation der Kaltlufttemperatur gegenüber dem gemessenen Temperaturwert korrigiert.

28. Verfahren nach einem der Ansprüche 25 bis 27, wobei der gemessene Temperaturwert eine Fahrzeuginnentemperatur und/oder die Fahrzeugaußentemperatur darstellt.

29. Verfahren nach Anspruch 28, wobei die Kaltlufttemperatur aus einer gewichteten Kombination einer Fahrzeuginnenraum- und der Fahrzeugaußenraumtemperatur bestimmt wird.

30. Verfahren nach Anspruch 25 oder 26, wobei die Kaltlufttemperatur mittels eines Sensors (10) im Luftkanal zwischen einem Gebläse (8) und dem Heizelement (3) gemessen wird.

**Claims**

1. An electric auxiliary heating for a motor vehicle, comprising at least one heating element (3) for heating the air flowing through the auxiliary heating, and a control unit (2) for adjusting the heating power of the at least one heating element (3), comprising
a temperature determination unit (5) which determines the cold air temperature of the air flowing through the auxiliary heating and to be heated by the auxiliary heating; and
a blower (8) which supplies the air to be heated to the heating element (3), wherein
the control unit (2) adjusts the heating power in dependence upon the cold air temperature determined, and adjusts, in dependence upon the vehicle speed, the temperature of the air discharged from the auxiliary heating;
**characterized in that**
the heating element (3) is a PTC-heating element; and
the blower (8) generates an air current with constant intensity.

2. An electric auxiliary heating according to claim 1, wherein the control unit (2) adjusts, starting from a basic value, the heating power for varying the temperature of the heated air in dependence upon the speed.

3. An electric auxiliary heating according to claim 2, wherein the basic value is preselectable or is adjusted automatically in dependence upon an external parameter.

4. An electric auxiliary heating according to claim 2 or 3, wherein the control unit adjusts the basic value in dependence upon the outside temperature.

5. An electric auxiliary heating according to any of claims 2 to 4, wherein the basic value is adjusted in dependence upon the preselectable air flow rate of the auxiliary heating.

6. An electric auxiliary heating according to any of claims 1 to 4, wherein the control unit (2) includes a memory for storing a characteristic field indicating the dependency of the heating power, which serves to vary the temperature of the heated air, on the vehicle speed.

7. An electric auxiliary heating according to any of claims 1 to 6, wherein the temperature determination unit (5) determines the cold air temperature on the basis of at least one measured temperature value.

8. An electric auxiliary heating according to claim 7, wherein the temperature determination unit (5) determines the cold air temperature additionally on the basis of at least one correction factor for the measured temperature value.

9. An electric auxiliary heating according to claim 8, wherein the correction factor corrects the difference between the measured temperature value and the cold air temperature to be determined.

10. An electric auxiliary heating according to claim 8 or 9, wherein the correction factor corrects a temporal variation of the cold air temperature with respect to the measured temperature value.

11. An electric auxiliary heating according to any of claims 8 to 10, wherein the measured temperature value indicates a temperature inside the vehicle and/or a temperature outside the vehicle.

12. An electric auxiliary heating according to claim 11, wherein the cold air temperature is determined from a weighted combination of a temperature inside the vehicle and a temperature outside the vehicle.

13. An electric auxiliary heating according to any of claims 7 to 12, wherein the measured temperature value is provided by an air conditioning system of the motor vehicle.

14. An electric auxiliary heating according to claim 7 or 8, comprising a sensor (10) used for measuring the temperature and arranged between a blower (8) for supplying the air to be heated and the heating element (3).

15. An electric auxiliary heating according to any of claims 1 to 14, wherein the control unit (2) comprises a memory having stored therein a characteristic field which describes the dependency of the heating power to be generated on input values, and wherein the control unit (2) adjusts, in accordance with the values of said characteristic field, the heating power to be generated.

16. An electric auxiliary heating according to any of claims 1 to 15, wherein the intensity of the air current is selectable by a user.

17. A motor vehicle seat comprising an air duct including at least one air discharge opening provided in the upper area of the seat and used for supplying air to the head, shoulder or neck area of a vehicle passenger, and further including an electric auxiliary heating (1) according to any of claims 1 to 16, which heats the air flowing through the air duct.

18. A method of controlling an electric auxiliary heating (1) for a motor vehicle, wherein the auxiliary heating comprises at least one heating element (3) for heating the air which flows through the auxiliary heating (1), comprising the steps of:

   generating an air current;
   determining (S1) the cold air temperature of the air flowing through and to be heated by the auxiliary heating (1);
   adjusting (S3, S4) the heating power to be supplied by the heating element in dependence upon the cold air temperature determined; and
   adjusting the temperature of the heated air discharged from the auxiliary heating in dependence upon the vehicle speed;
   **characterized in that**
   the heating element (3) is a PTC-heating element; and
   the air current has a constant intensity.

19. A method according to claim 18, wherein, starting from a basic value, the heating power is adjusted for varying the temperature of the heated air in dependence upon the speed.

20. A method according to claim 19, wherein the basic value is preselected, or adjusted in dependence upon an external parameter.

21. A method according to claim 20, wherein the basic value is adjusted in dependence upon the outside temperature.

22. A method according to any of claims 19 to 21, wherein the basic value is adjusted in dependence upon the preselectable air flow rate of the auxiliary heating (1).

23. A method according to any of claims 19 to 21, wherein a characteristic field is used for adjusting the heating power, said characteristic field indicating the dependency of the heating power, which serves to vary the temperature of the heated air, on the vehicle speed.

24. A method according to claim any of claims 18 to 23, wherein the cold air temperature is determined on the basis of at least one measured temperature value.

25. A method according to claim 24, wherein the cold air temperature is determined additionally on the basis of at least one correction factor for the measured temperature value.

26. A method according to claim 25, wherein the correction factor corrects the difference between the measured temperature value and the cold air temperature to be determined.

27. A method according to claim 25 or 26, wherein the correction factor corrects a temporal variation of the cold air temperature with respect to the measured temperature value.

28. A method according to any of claims 25 to 27, wherein the measured temperature value indicates a temperature inside the vehicle and/or the temperature outside the vehicle.

29. A method according to claim 28, wherein the cold air temperature is determined from a weighted combination of a temperature inside the vehicle and the temperature outside the vehicle.

30. A method according to claim 25 or 26, wherein the cold air temperature is measured by means of a sensor (10) arranged in the air duct between a blower (8) and the heating element (3).

**Revendications**

1. Chauffage électrique d'appoint pour un véhicule automobile avec au moins un élément de chauffage (3) permettant de réchauffer l'air circulant à travers le chauffage d'appoint et une unité de commande (2) pour régler la puissance de chauffage de l'au moins un élément de chauffage (3), comprenant

une unité de détermination de température (5), qui fournit la température d'air froid de l'air circulant à travers le chauffage d'appoint et à réchauffer par le chauffage d'appoint, et

une soufflante (8) qui alimente l'air à réchauffer à l'élément de chauffage (3), dans lequel

l'unité de commande (2) règle la puissance de chauffage en fonction de la température d'air froid fournie, et règle la température de l'air réchauffé sortant du chauffage d'appoint en fonction de la vitesse du véhicule,

**caractérisé en ce que**

l'élément de chauffage (3) est un élément chauffant PTC,

la soufflante (8) fournit un flux d'air d'intensité constante.

2. Chauffage électrique d'appoint selon la revendication 1, dans lequel l'unité de commande (2) règle la puissance de chauffage pour la variation de la température de l'air réchauffé en fonction de la vitesse à partir d'une grandeur de base.

3. Chauffage électrique d'appoint selon la revendication 2, dans lequel la grandeur de base peut être présélectionnée ou est réglée automatiquement en fonction d'un paramètre externe.

4. Chauffage électrique d'appoint selon la revendication 2 ou 3, dans lequel l'unité de commande règle la grandeur de base en fonction de la température externe.

5. Chauffage électrique d'appoint selon l'une des revendications 2 à 4, dans lequel la grandeur de base est réglée en fonction du débit d'air présélectionné du chauffage d'appoint.

6. Chauffage électrique d'appoint selon l'une des revendications 1 à 4, dans lequel l'unité de commande (2) comporte une mémoire pour stocker un champ caractéristique qui indique la dépendance de la vitesse du véhicule en fonction de la puissance de chauffage par rapport à la variation de température de l'air réchauffé.

7. Chauffage électrique d'appoint selon l'une des revendications 1 à 6, dans lequel l'unité de détermination de température (5) fournit la température d'air froid en fonction d'au moins une valeur de température mesurée.

8. Chauffage électrique d'appoint selon la revendication 7, dans lequel l'unité de détermination de température (5) fournit la température d'air froid également en fonction d'au moins un facteur de correction pour la valeur de température mesurée.

9. Chauffage électrique d'appoint selon la revendication 8, dans lequel le facteur de correction corrige la différence entre la valeur de température mesurée et la température d'air froid à fournir.

10. Chauffage électrique d'appoint selon la revendication 8 ou 9, dans lequel le facteur de correction corrige une variation temporelle de la température d'air froid par rapport à la valeur de température mesurée.

11. Chauffage électrique d'appoint selon l'une des revendications 8 à 10, dans lequel la valeur de température mesurée fournit une température intérieure et/ou extérieure du véhicule.

12. Chauffage électrique d'appoint selon la revendication 11, dans lequel la température d'air froid est déterminée par une combinaison pondérée d'une température d'habitacle du véhicule et de la température extérieure du véhicule.

13. Chauffage électrique d'appoint selon l'une des revendications 7 à 12, dans lequel la valeur de température mesurée d'une installation d'air conditionné de véhicule automobile est mise à disposition.

14. Chauffage électrique d'appoint selon la revendication 7 ou 8, avec un capteur de mesure de température (10) agencé entre une soufflante (8) pour alimenter l'air à réchauffer et l'élément de chauffage (3).

15. Chauffage électrique d'appoint selon l'une des revendications 1 à 14, dans lequel l'unité de commande (2) comprend une mémoire où est stocké un champ caractéristique qui décrit la dépendance de la puissance de chauffage à procurer par rapport à des grandeurs d'entrée, et l'unité de commande (2) règle la puissance de chauffage à fournir selon les valeurs du champ caractéristique.

16. Chauffage électrique d'appoint selon l'une des revendications 1 à 15, dans lequel l'intensité du flux d'air peut être sélectionnée par un utilisateur.

**17.** Siège de véhicule automobile avec un canal d'air comportant au moins une ouverture de sortie d'air agencée dans la partie supérieure du siège pour alimenter la zone de tête, d'épaules ou de cou d'un passager de véhicule et un chauffage électrique d'appoint (1) selon une des revendications 1 à 16 qui est réchauffé par l'air circulant dans le canal d'air.

**18.** Procédé de commande d'un chauffage électrique d'appoint (1) pour un véhicule automobile, dans lequel le chauffage d'appoint comporte au moins un élément de chauffage (3) permettant de réchauffer l'air circulant à travers le chauffage d'appoint (1), comprenant les étapes consistant à :

fournir un flux d'air,
déterminer (S1) la température d'air froid de l'air circulant à travers le chauffage d'appoint et à réchauffer par le chauffage d'appoint (1),
et
régler (S3, S4) la puissance de chauffage à fournir par l'élément de chauffage en fonction de la température d'air froid déterminée,
régler la température de l'air réchauffé sortant du chauffage d'appoint en fonction de la vitesse du véhicule,
**caractérisé en ce que**
l'élément de chauffage (3) est un élément chauffant PTC,
et le flux d'air présente une intensité constante.

**19.** Procédé selon la revendication 18, dans lequel la puissance de chauffage est réglée pour la variation de la température de l'air réchauffé en fonction de la vitesse à partir d'une grandeur de base.

**20.** Procédé selon la revendication 19, dans lequel la grandeur de base est présélectionnée ou est réglée en fonction d'un paramètre externe.

**21.** Procédé selon la revendication 20, dans lequel la grandeur de base est réglée en fonction de la température externe.

**22.** Procédé selon l'une des revendications 19 à 21, dans lequel la grandeur de base est réglée en fonction du débit d'air présélectionné du chauffage d'appoint (1).

**23.** Procédé selon l'une des revendications 19 à 21, dans lequel, pour régler la puissance de chauffage d'un champ caractéristique, qui indique la dépendance de la puissance de chauffage pour la variation de la température de l'air réchauffé à partir de la vitesse du véhicule.

**24.** Procédé selon l'une des revendications 18 à 23, dans lequel la température d'air froid est fournie en fonction d'au moins une valeur de température mesurée.

**25.** Procédé selon la revendication 24, dans lequel la température d'air froid est en outre fournie en fonction d'au moins un facteur de correction pour la valeur de température mesurée.

**26.** Procédé selon la revendication 25, dans lequel le facteur de correction corrige la différence entre la température mesurée et la température d'air froid à déterminer.

**27.** Procédé selon l'une des revendications 25 ou 26, dans lequel le facteur de correction corrige une variation temporelle de la température d'air froid par rapport à la valeur de température mesurée.

**28.** Procédé selon l'une des revendications 25 à 27, dans lequel la valeur de température mesurée représente une température intérieure et/ou extérieure du véhicule.

**29.** Procédé selon la revendication 28, dans lequel la température d'air froid est déterminée par une combinaison pondérée d'une température d'habitacle du véhicule et de la température extérieure du véhicule.

**30.** Procédé selon la revendication 25 ou 26, dans lequel la température d'air froid est mesurée au moyen d'un capteur (10) dans le canal d'air entre une soufflante (8) et l'élément de chauffage (3).

## Figur 1

# Figur 2

# Figur 3

# Figur 4

# Figur 5

# Figur 6

```
┌─────────────────────────────────────────────────┐
│     S1: Ermittlung der Kaltlufttemperatur        │
└─────────────────────────────────────────────────┘
                        │
                        ▼
┌─────────────────────────────────────────────────┐
│   S2: Bestimmung der Warmlufttemperatur          │
└─────────────────────────────────────────────────┘
                        │
                        ▼
┌─────────────────────────────────────────────────┐
│  S3: Bestimmung der zu erbringende Heizleistung  │
└─────────────────────────────────────────────────┘
                        │
                        ▼
┌─────────────────────────────────────────────────┐
│  S4: Einstellen der Heizleistung des Heizelements│
└─────────────────────────────────────────────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10054009 A1
- DE 19850827
- EP 1511651 A
- DE 102004030705
- US 20061175877 A
- US 20050085968 A